# EUROPEAN PATENT APPLICATION

(11) **EP 4 657 869 A1**
(43) Date of publication of application: **03.12.2025**
(21) Application number: 24769926.7
(22) Date of filing: 12.03.2024
(51) Int. Cl.: H04N 23/55

(54) **CAMERA MODULE AND ELECTRONIC DEVICE**

(30) Priority: 15.03.2023 CN 202310284243
(71) Applicant: Huawei Technologies Co., Ltd., Shenzhen, Guangdong 518129 (CN)
(72) Inventor: JIANG, Haixia, Shenzhen, Guangdong 518129 (CN); WANG, Peng, Shenzhen, Guangdong 518129 (CN); LI, Sikun, Shenzhen, Guangdong 518129 (CN); WU, Xuewei, Shenzhen, Guangdong 518129 (CN)
(74) Representative: Gill Jennings & Every LLP
(86) International application number: PCT/CN2024/081157
(87) International publication number: WO 2024/188234

(57) **Abstract**

This application provides a camera module and an electronic device. The camera module includes a lens, an SMA actuator, a substrate, and an image sensor. The SMA actuator includes a carrier, a base, and an SMA actuation component. The lens is fastened to the carrier. The SMA actuation component is connected to the carrier and the base. The SMA actuation component is configured to drive the carrier to move relative to the base. A housing of the SMA actuator includes a top plate and a bottom plate that are disposed opposite to each other. The bottom plate includes a first portion and four second portions. The four second portions are spaced on an outer peripheral side of the first portion. A distance between the second portion and the top plate is greater than a distance between the first portion and the top plate. Four corners of the substrate are provided with recessed avoidance spaces. The first portion is fastened to the substrate, and at least a part of the second portion is located in the avoidance space. The image sensor is fastened to a middle of the substrate and is electrically connected to the substrate. The image sensor is disposed facing the lens. The camera module can have a small module shoulder height while ensuring image shooting quality.

## Description

This application claims priority to Chinese Patent Application No. 202310284243.1, filed with the China National Intellectual Property Administration on March 15, 2023 and entitled "CAMERA MODULE AND ELECTRONIC DEVICE", which is incorporated herein by reference in its entirety.

### TECHNICAL FIELD

This application relates to the field of image shooting technologies, and in particular, to a camera module and an electronic device.

### BACKGROUND

Currently, a camera module is usually disposed in an electronic device like a mobile phone. The camera module drives, by using an actuator, an optical lens to move, to implement automatic focusing (automatic focusing, AF) and/or optical image stabilization (optical image stabilization, OIS). This ensures image shooting clarity of the electronic device. SMA (shape memory alloy, shape memory alloy) actuators are gradually widely used in the camera modules based on features such as large driving forces and small sizes of the SMA actuators.

A module shoulder height of the camera module affects an overall thickness of the electronic device and a shape of a camera decorating part, and an appearance and a shape of the mobile phone are affected. Therefore, there is a quest for a camera module of a small module shoulder height. The module shoulder height of the camera module is mainly affected by a height of the actuator. However, if the height of the SMA actuator is directly reduced, driving performance of the SMA actuator is affected, causing poor image shooting quality of the camera module. Therefore, how to reduce the module shoulder height of the camera module while ensuring image shooting quality of the camera module is an important focus of vendors.

### SUMMARY

Embodiments of this application provide a camera module and an electronic device. The camera module can have a small module shoulder height while ensuring image shooting quality, to facilitate a thin design of the electronic device.

To achieve the foregoing objective, the following technical solutions are used in embodiments of this application.

According to a first aspect, this application provides a camera module. The camera module includes a lens and an SMA actuator. The SMA actuator includes a carrier, a base, and an SMA actuation component. The lens is fastened to the carrier. The SMA actuation component is connected to the carrier and the base. The SMA actuation component is configured to drive the carrier to move relative to the base, to implement automatic focusing and/or optical image stabilization.

The SMA actuator further includes a top plate and a bottom plate that are disposed opposite to each other. The carrier, the base, and the SMA actuation component are located between the top plate and the bottom plate. The bottom plate is provided with a first through hole that directly faces the lens. The bottom plate includes a first portion and four second portions. The first portion is disposed around the first through hole, the four second portions are spaced on an outer peripheral side of the first portion, and a distance between the second portion and the top plate is greater than a distance between the first portion and the top plate.

The camera module further includes a substrate and an image sensor. Four corners of the substrate are provided with recessed avoidance spaces. The first portion is fastened to the substrate, and at least a part of the second portion is located in the avoidance space. The image sensor is fastened to a middle of the substrate and is electrically connected to the substrate. The image sensor is disposed facing the lens.

In this application, the SMA actuator has a simple structure, a large driving force, and a small volume, so that both automatic focusing and optical image stabilization can be implemented, and a volume of the camera module can be reduced.

In this application, a shoulder height H of the camera module, a height H1 of the SMA actuator in a third direction, a thickness H2 of the substrate in the third direction, and a depth T of the second portion of the bottom plate extending into the avoidance space of the substrate meet: H=H1+H2-T. The depth T of the second portion of the bottom plate extending into the avoidance space of the substrate is a spacing between a surface that is of the second portion of the bottom plate and that is away from the top plate and a surface that is of the first portion of the substrate and that is close to the bottom plate in the third direction.

In this application, the bottom plate of the SMA actuator uses a step structure, so that a distance between the second portion of the bottom plate and the top plate is large, to ensure driving performance of the SMA actuator. This ensures image shooting quality of the camera module. In addition, a distance between the first portion of the bottom plate and the top plate is small, the first portion of the bottom plate is fastened to the substrate, and the second portion of the bottom plate is embedded in the avoidance space of the substrate. In this way, a height of the SMA actuator after being assembled with a photosensitive assembly is small, so that a shoulder height of the camera module is effectively reduced, thinning of the camera module is implemented, and impact on an overall thickness and appearance of the electronic device in which the camera module is used is reduced.

In some implementations, a first distance is formed between a surface that is of the second portion of the bottom plate and that is away from the top plate and a surface that is of the top plate and that is away from the bottom plate. A second distance is formed between a surface that is of the substrate and that is away from the top plate and the surface that is of the top plate and that is away from the bottom plate. The first distance is slightly less than the second distance. This reduces a shoulder height of the camera module, and reserves an assembly tolerance between the SMA actuator and the photosensitive assembly in the third direction, to improve assembly precision of the camera module. In another implementation, the surface that is of the second portion of the bottom plate and that is away from the top plate may alternatively be flush with the surface that is of the substrate and that is away from the top plate, to further reduce the shoulder height of the camera module. In other words, the depth T of the second portion of the bottom plate extending into the avoidance space of the substrate may be close to a sum of thicknesses of the substrate and a first adhesive layer. In some implementations, the shoulder height of the camera module may be reduced by about 0.4 mm to 0.6 mm, for example, by about 0.5 mm, compared with that of a camera module in a conventional solution.

In some possible implementations, the SMA actuation component includes four groups of actuation units, and the four groups of actuation units are evenly arranged in a circumferential direction of the carrier. Each group of actuation units includes a pair of movable clamping jaws, a pair of static clamping jaws, and two SMA wires. The pair of movable clamping jaws is fastened to the carrier, the pair of static clamping jaws is fastened to the base, the pair of movable clamping jaws and the pair of static clamping jaws are spaced in the circumferential direction of the carrier, and the two SMA wires are cross-connected to the pair of movable clamping jaws and the pair of static clamping jaws. In the circumferential direction of the carrier, pairs of movable clamping jaws of two adjacent groups of actuation units are adjacently disposed, or pairs of static clamping jaws of two adjacent groups of actuation units are adjacently disposed.

In some possible implementations, the pair of movable clamping jaws includes a first movable clamping jaw and a second movable clamping jaw, the second movable clamping jaw is located between the first movable clamping jaw and the bottom plate, and the second movable clamping jaw is disposed directly facing the second portion. In this case, when the second movable clamping jaw is projected onto the bottom plate in the third direction, a projection falls on the second portion of the bottom plate.

In this implementation, a distance between the second portion of the bottom plate and the top plate is greater than a distance between the first portion of the bottom plate and the top plate and a distance between the third portion of the bottom plate and the top plate, and the second movable clamping jaw is disposed directly facing the second portion of the bottom plate. In this way, when the distance between the second portion of the bottom plate and the top plate is greater than or equal to a sum of an upper stroke, a lower stroke, and a height of the clamping jaw of the SMA actuator, the distance between the first portion of the bottom plate 241 and the top plate 243 and the distance between the third portion of the bottom plate 241 and the top plate 243 in the housing can be reduced, to reduce a local height of the SMA actuator. This facilitates compact arrangement of the SMA actuator with another structure when the SMA actuator is assembled in the camera module, to reduce a shoulder height of the camera module.

In some implementations, in a focusing process of the SMA actuator, when the carrier sinks relative to the base, the second movable clamping jaw may partially extend into a first sink groove.

In some implementations, the first static clamping jaw may be disposed directly facing the second portion of the bottom plate. In other words, in the same group of actuation units, the second movable clamping jaw directly faces one second portion of the bottom plate, and the first static clamping jaw directly faces the other second portion of the bottom plate. Because the distance between the second portion of the bottom plate and the top plate is large, an arrangement space of the first static clamping jaw and the second static clamping jaw is sufficient. This helps ensure that a spacing between the first static clamping jaw and the second static clamping jaw in the third direction meets a design requirement.

In some possible implementations, in the same group of actuation units, an arrangement direction of the first movable clamping jaw and the second movable clamping jaw is parallel to an optical axis of the lens. The first SMA wire and the second SMA wire are equal in length, and tilt angles of the first SMA wire and the second SMA wire relative to the optical axis of the lens are equal. An arrangement direction of the first static clamping jaw and the second static clamping jaw may also be parallel to the optical axis of the lens, that is, parallel to the third direction.

In this implementation, the first movable clamping jaw and the second movable clamping jaw have a same structure, and an arrangement direction of the first movable clamping jaw and the second movable clamping jaw is parallel to the third direction, so that the first movable clamping jaw and the second movable clamping jaw can be symmetrically arranged from top to bottom, to reduce an assembly requirement and facilitate commissioning. In this way, an assembly yield of the SMA actuator is high. The first static clamping jaw and the second static clamping jaw have a same structure, and an arrangement direction of the first static clamping jaw and the second static clamping jaw is parallel to the third direction, so that the first static clamping jaw and the second static clamping jaw can be symmetrically arranged from top to bottom, to reduce an assembly requirement, and facilitate commissioning. In this way, an assembly yield of the SMA actuator is high.

A pair of movable clamping jaws and a pair of static clamping jaws of the SMA actuation component may alternatively be symmetrically arranged on a left side and a right side, that is, symmetrical relative to an XZ plane or symmetrical relative to a YZ plane. This further reduces an assembly requirement and commissioning difficulty, and improves an assembly yield of the SMA actuator.

In some possible implementations, the carrier includes a first side surface and a fourth side surface that are disposed adjacent to each other, a first edge line is formed at an intersection of the first side surface and the fourth side surface, a pair of movable clamping jaws of one group of actuation units is fastened to the first side surface, and a pair of movable clamping jaws of the other group of actuation units is fastened to the fourth side surface. In the same group of actuation units, a distance between the second movable clamping jaw and the first edge line is less than a distance between the first movable clamping jaw and the first edge line.

In this implementation, both the movable clamping jaws and the static clamping jaws of the SMA actuation component are asymmetrically arranged from top to bottom, and a plurality of SMA wires are perpendicular to the third direction, and are translated in a direction away from an epitaxial portion of the base, to avoid the epitaxial portion of the base. A gap is always kept between the plurality of SMA wires and the epitaxial portion of the base. In this way, reliability of working of the SMA actuator is ensured. In addition, because a space around the first edge line is a reserved movement space of the clamping jaw, and the space is large, moving the movable clamping jaw toward the space helps improve space utilization of the SMA actuator.

The first movable clamping jaw and the second movable clamping jaw are structural members independent of each other, to supply power to the first SMA wire and the second SMA wire respectively. Alternatively, the first movable clamping jaw and the second movable clamping jaw may alternatively be connected to form an integral structure, to simplify structural composition of the SMA actuator and facilitate assembly.

A height of a first connecting post and a height of a second connecting post of the carrier are greater than a height of a first body. In this case, it can be ensured that a height from the first movable clamping jaw to the second movable clamping jaw (namely, a height of the clamping jaw) meets a design requirement, and a gap can be further formed between the first body and a second body of the base, so that the carrier can move relative to the base in the third direction Z.

In some possible implementations, projections of the two SMA wires on a reference plane form an intersection point, the reference plane is parallel to the optical axis of the lens and parallel to the two SMA wires, and a projection of the optical axis of the lens on the reference plane covers the intersection point. In this case, an intersection position of the two SMA wires is disposed in the middle, that is, the two SMA wires are aligned with the optical axis of the lens in a first direction or a second direction.

In this implementation, the first movable clamping jaw, the first SMA wire, and the first static clamping jaw are symmetrical to the second movable clamping jaw, the second SMA wire, and the first static clamping jaw, with respect to the XZ plane or the YZ plane, so that a drive action of the actuation component of the SMA actuator is easier to implement, and drive precision is high. In another implementation, an intersection position of the two SMA wires may not be disposed in the middle, for example, the intersection position is close to the first edge line or a second edge line relative to the optical axis of the lens.

In some possible implementations, the carrier includes a first body, a first connecting post, and a second connecting post. The first body includes four first corner portions, the first connecting post and the second connecting post are respectively fastened to two first corner portions that are arranged diagonally, movable clamping jaws of the four groups of actuation units are fastened to the first connecting post and the second connecting post, and a first notch and a second notch are respectively disposed on the other two first corner portions that are arranged diagonally.

The base includes a second body, a third connecting post, and a fourth connecting post. The second body includes four second corner portions. The third connecting post and the fourth connecting post are respectively fastened to two second corner portions that are arranged diagonally. Static clamping jaws of the four groups of actuation units are fastened to the third connecting post and the fourth connecting post, and a third notch and a fourth notch are respectively disposed on the other two second corner portions that are arranged diagonally.

The second body is located between the first body and the bottom plate, the first connection rod is partially located in the third notch, the second connection rod is partially located in the fourth notch, the third connection rod is partially located in the first notch, and the fourth connection rod is partially located in the second notch.

In this application, to ensure motion stability of the carrier relative to the base, a shape of a wall surface of the connecting post adapts to a shape of a wall surface of the notch. There is a gap between the wall surface of the connection rod and the wall surface of the notch, and the gap makes the carrier to move relative to the base on the XY plane or tilt in any direction around, to implement optical image stabilization. When the carrier moves by a specific distance relative to the base on the XY plane or tilts by a specific angle in any direction around, the wall surface of the connecting post is in contact with the wall surface of the notch, to prevent the carrier from continuing to move, so as to limit a maximum movement distance and a maximum tilt angle of the carrier.

Both structures and an assembly structure of the carrier, the base, and the four groups of actuation units may be symmetrical relative to a first plane and symmetrical relative to a second plane, to improve stability and reliability of driving of the SMA actuator. An arrangement direction of the first connecting post and the second connecting post and an axial direction of the carrier may jointly define the first plane, an arrangement direction of the third connecting post and the fourth connecting post and the axial direction of the carrier may jointly define the second plane, and the second plane may be perpendicular to the first plane.

In some possible implementations, the second body further includes four second side portions, the four second side portions and the four second corner portions are alternately arranged one by one, the base further includes at least one epitaxial portion, and the at least one epitaxial portion is fastened to outer side surfaces of the four second side portions. In a direction parallel to the optical axis of the lens, a size of the epitaxial portion is greater than a size of the second body, and the at least one epitaxial portion is provided with an exposed gold finger. In this implementation, because a height of the epitaxial portion is large, there is a sufficient space for arranging a gold finger and another electrical connection structure.

In some possible implementations, the substrate includes a circuit board and a stiffener, the first portion is fastened to the circuit board, the stiffener is stacked on a side that is of the circuit board and that is away from the first portion, and avoidance space penetrates the circuit board and the stiffener. The stiffener is configured to increase structural strength of the circuit board. Because the avoidance space penetrates through the circuit board and the stiffener, a depth of the second portion of the bottom plate extending into the substrate may be large. This helps further reduce a module shoulder height of the camera module.

In some possible implementations, the substrate includes a circuit board and a stiffener, the first portion is fastened to the circuit board, the stiffener is stacked on a side that is of the circuit board and that is away from the first portion, the avoidance space penetrates the circuit board, and a part of the stiffener is exposed. The stiffener is configured to increase structural strength of the circuit board.

In some possible implementations, the first portion is bonded to the circuit board, and the second portion is bonded to the stiffener. Because the first portion of the bottom plate of the SMA is fastened to the substrate, and the second portion is also fastened to the substrate, a connection area between the bottom plate and the substrate is large, so that a risk of debonding between the bottom plate and the substrate can be reduced, and structural reliability of the camera module is improved.

In some possible implementations, the camera module further includes a light filter and a light filter bracket. The light filter bracket is fastened to a side that is of the substrate and that is close to the lens, and is disposed around the image sensor. The light filter is located between the lens and the image sensor, and is fastened to the light filter bracket. The light filter may be configured to filter out stray light of scene light passing through the lens, to ensure that an image shot by the camera module has better clarity.

In some possible implementations, the bottom plate further includes a third portion. The third portion is located on an inner side of the first portion, the first through hole is formed on the third portion, a distance between the third portion and the top plate is less than the distance between the first portion and the top plate, and the base is fastened to the third portion. The light filter and the light filter bracket are located between the first through hole and the substrate and/or between the third portion and the substrate.

In this implementation, the light filter and the light filter bracket of the photosensitive assembly may be arranged in an accommodation space between the bottom plate and the substrate, so that an assembly structure of the SMA actuator and the photosensitive assembly is more compact. This reduces a height of the camera module in the third direction.

In some implementations, the second body of the base is fastened to the third portion of the bottom plate, and the epitaxial portion of the base may be located between the third portion of the bottom plate and a first side plate, and located between the first portion of the bottom plate and the top plate, that is, located in a space above the first portion of the bottom plate. In this case, an assembly structure of the base and the bottom plate can fully use space of the bottom plate, and reduce a height of the SMA actuator in the third direction.

In some possible implementations, the light filter bracket includes an insulation body and a magnetic conductive member. The magnetic conductive member is embedded in the insulation body, the insulation body is fastened to the substrate, and the magnetic conductive member is electrically connected to the substrate. The light filter bracket may be formed through an insert-molding (insert-molding) process. In this implementation, the light filter bracket has high structural strength. This helps reduce a risk of breaking the light filter.

In the camera module, because a plurality of SMA wires of the SMA actuator are controlled by using a PWM (Pulse-width modulation, pulse-width modulation) voltage, and a PWM signal is easily coupled to a signal of the image sensor, the image sensor is interfered with, and there are risks such as a disordered pattern (for example, a stripe) and frame freezing. In this implementation, the light filter bracket is located on a side that is of the image sensor and that is close to the SMA actuator, the magnetic conductive member of the light filter bracket is grounded, and the magnetic conductive member has a magnetically conductive capability. Therefore, interference of the PWM signal of the SMA actuator to the image sensor can be shielded or reduced, to improve imaging quality of the camera module.

In some possible implementations, the insulation body may be frame-shaped, the magnetic conductive member may be frame-shaped, and the magnetic conductive member protrudes relative to an inner peripheral side surface of the insulation body. The light filter is fastened to the magnetic conductive member. In this case, the magnetic conductive member is configured to provide a support step for supporting the light filter. Compared with a plastic step used in a conventional light filter bracket, a thickness of the support step in this implementation may be reduced from about 0.18 mm to about 0.1 mm. This helps reduce a back focal length of the lens, to reduce a total height of the camera module.

In some possible implementations, the camera module may further include a variable aperture, the variable aperture has an aperture hole, the aperture hole is located on a light entrance side of the lens, and a size of the aperture hole is variable. The variable aperture is configured to adjust an amount of light entering the camera module, so that the camera module can maintain constant image shooting quality under a plurality of brightness conditions.

The variable aperture is fastened to the lens to be fastened relative to the lens, so that the variable aperture can move synchronously with the lens. In this way, a position of the aperture hole relative to the lens remains unchanged. This ensures image shooting quality of the camera module. Alternatively, the variable aperture may alternatively be fastened to another component of the camera module, for example, fastened to a carrier of the SMA actuator.

According to a second aspect, this application further provides an electronic device. The electronic device includes an image processor and the camera module according to any one of the foregoing implementations, and the image processor is communicatively connected to the camera module. The camera module can have a small module shoulder height while ensuring image shooting quality, so that image shooting experience of the electronic device is good, and this is conducive to a thin design of the electronic device.

### BRIEF DESCRIPTION OF DRAWINGS

To describe the technical solutions in embodiments of this application or in the background more clearly, the following describes the accompanying drawings for describing embodiments of this application or the background.
FIG. 1 is a diagram of a structure of an electronic device in some embodiments according to an embodiment of this application;
FIG. 2 is a diagram of a partial exploded structure of the electronic device shown in FIG. 1;
FIG. 3 is a diagram of a structure of a camera module shown in FIG. 2 in some embodiments;
FIG. 4 is a diagram of a partial exploded structure of the camera module shown in FIG. 3;
FIG. 5 is a diagram of a structure of an SMA actuator shown in FIG. 4 in some embodiments;
FIG. 6 is a diagram of a structure of a base shown in FIG. 5 from another perspective;
FIG. 7 is a diagram of a partial structure of the SMA actuator shown in FIG. 4;
FIG. 8 is a diagram of a structure of a lower cover shown in FIG. 5 from another perspective;
FIG. 9 is a diagram of a structure of the lower cover shown in FIG. 8 from another perspective;
FIG. 10 is a cross-sectional diagram of a structure of the SMA actuator shown in FIG. 4 cut along A-A;
FIG. 11 is a cross-sectional diagram of a structure of the SMA actuator shown in FIG. 4 cut along B-B;
FIG. 12 is a diagram of an internal structure of the SMA actuator shown in FIG. 4 in some other embodiments;
FIG. 13 is a diagram of a structure of an SMA actuation component of the SMA actuator shown in FIG. 12;
FIG. 14 is a diagram of a structure of the SMA actuation component shown in FIG. 13 from another perspective;
FIG. 15 is a diagram of a structure of four groups of actuation units of the SMA actuation component shown in FIG. 13;
FIG. 16 is a diagram of an exploded structure of a photosensitive assembly shown in FIG. 4;
FIG. 17 is a cross-sectional diagram of a structure of the photosensitive assembly shown in FIG. 4 cut along C-C;
FIG. 18 is a diagram of a structure of the photosensitive assembly shown in FIG. 4 from another perspective;
FIG. 19 is a diagram of a partial structure of the camera module shown in FIG. 3 from another perspective;
FIG. 20 is a diagram of a structure of the camera module shown in FIG. 3 from another perspective;
FIG. 21 is a cross-sectional diagram of a structure of the camera module shown in FIG. 3 cut along D-D;
FIG. 22 is a diagram of the structure shown in FIG. 21 from another perspective;
FIG. 23 is a cross-sectional diagram of a structure of the camera module shown in FIG. 3 cut along E-E;
FIG. 24 is a diagram of a structure of the camera module shown in FIG. 2 in some other embodiments;
FIG. 25 is a diagram of a partial exploded structure of the camera module shown in FIG. 24;
FIG. 26 is a diagram of an exploded structure of a photosensitive assembly shown in FIG. 25;
FIG. 27 is a cross-sectional diagram of a structure of the photosensitive assembly shown in FIG. 25 cut along F-F;
FIG. 28 is a cross-sectional diagram of a structure of the camera module shown in FIG. 24 cut along G-G; and
FIG. 29 is a diagram of the structure shown in FIG. 28 from another perspective.

### DESCRIPTION OF EMBODIMENTS

The following describes embodiments of this application with reference to the accompanying drawings in embodiments of this application.

In the descriptions of embodiments of this application, it should be noted that terms "installation" and "connection" should be understood in a broad sense unless there is a clear stipulation and limitation. For example, "connection" may be a detachable connection, a nondetachable connection, a direct connection, or an indirect connection through an intermediate medium. Orientation terms mentioned in embodiments of this application, for example, "up", "down", "inside", "outside", "top", "bottom", "side", "left", and "right" are merely directions for reference to the accompanying drawings. Therefore, the orientation terms are used to better and more clearly describe and understand embodiments of this application, but do not indicate or imply that a specified apparatus or element needs to have a specific orientation, and be constructed and operated in a specific orientation. Therefore, the orientation terms cannot be understood as a limitation on embodiments of this application.

The term "A plurality of' means at least two. The term "and/or" describes only an association relationship for describing associated objects and represents that three relationships may exist. For example, A and/or B may represent the following three cases: Only A exists, both A and B exist, and only B exists. In addition, a character "/" in this specification generally indicates an "or" relationship between associated objects.

The terms "first", "second", "third", and "fourth" are merely intended for a purpose of description, and shall not be understood as an indication or implication of relative importance or implicit indication of a quantity of indicated technical features. Therefore, a feature defined by "first", "second", "third", or "fourth" may explicitly or implicitly include one or more of the features.

In addition, limitations on relative position relationships, for example, being parallel, perpendicular, or aligned, are mentioned in embodiments of this application. These limitations are all defined based on a current technique level, but are not absolutely strict limitations. A small deviation is allowed, and being approximately parallel, approximately perpendicular, approximately aligned, or the like is allowed. For example, that A is parallel to B means that A is parallel or approximately parallel to B, and an included angle of 0 degrees to 10 degrees between A and B is allowed. For example, that A is vertical to B means that A is vertical or approximately vertical to B, and an included angle of 80 degrees to 100 degrees between A and B is allowed.

This application provides an electronic device. The electronic device is a type of electronic device having an image shooting function. The electronic device may be a portable electronic apparatus or another appropriate electronic apparatus. For example, the electronic device may be a mobile phone, a tablet computer (tablet personal computer), a laptop computer (laptop computer), a personal digital assistant (personal digital assistant, PDA), a camera, a personal computer, a notebook computer, a vehicle-mounted device, a wearable device, or the like, and the wearable device may be augmented reality (augmented reality, AR) glasses, an AR helmet, virtual reality (virtual reality, VR) glasses, a VR helmet, or the like.

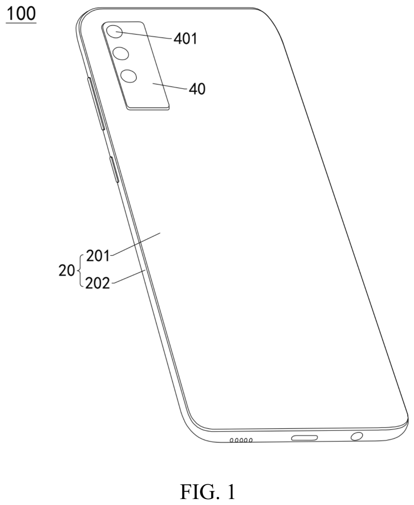

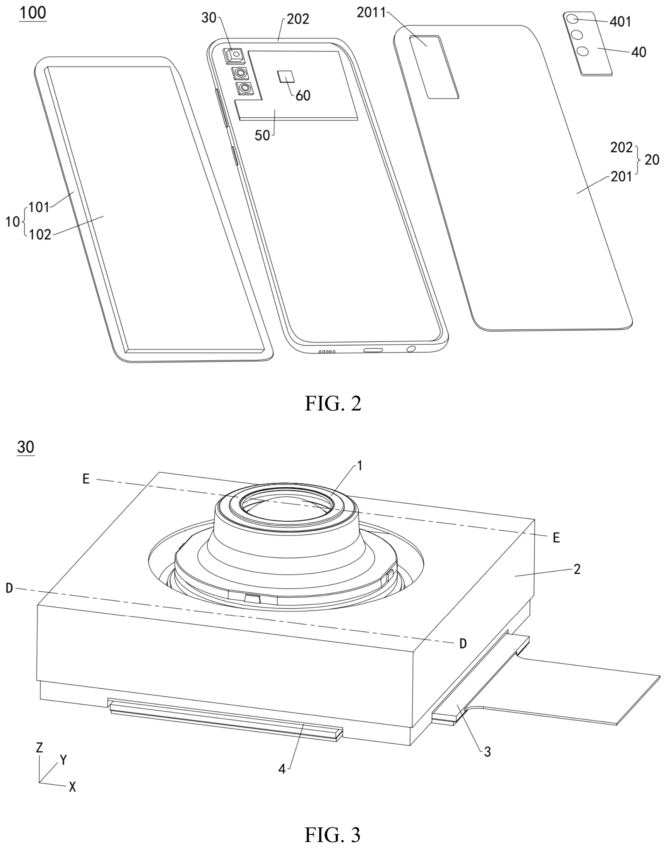

Refer to FIG. 1 and FIG. 2. FIG. 1 is a diagram of a structure of an electronic device 100 in some embodiments according to an embodiment of this application. FIG. 2 is a diagram of a partial exploded structure of the electronic device 100 shown in FIG. 1. In this embodiment, an example in which the electronic device 100 is a mobile phone is used for description. It may be understood that FIG. 1 and FIG. 2 merely show examples of some components included in the electronic device 100. Actual shapes, actual sizes, actual positions, and actual structures of these components are not limited by FIG. 1 and FIG. 2. The electronic device 100 may alternatively include more or fewer components than those in FIG. 1 and FIG. 2.

In some embodiments, the electronic device 100 may include a screen 10, a rear housing 20, a camera module 30, and a camera decorative cover 40. The screen 10 may be configured to display an image, a video, or the like. The screen 10 includes a transparent cover plate 101 and a display 102. The transparent cover plate 101 and the display 102 are stacked and fastened to each other. The transparent cover plate 101 is mainly configured to protect the display 102 and prevent dust. A material of the transparent cover plate 101 includes but is not limited to glass. The display 102 may be a flexible display or a rigid display. For example, the display 102 may be an organic light-emitting diode (organic light-emitting diode, OLED) display, an active-matrix organic light-emitting diode (active-matrix organic light-emitting diode, AMOLED) display, a mini light-emitting diode (mini organic light-emitting diode) display, a micro light-emitting diode (micro organic light-emitting diode) display, a micro organic light-emitting diode (micro organic light-emitting diode) display, a quantum dot light-emitting diode (quantum dot light-emitting diode, QLED) display, a liquid crystal display (liquid crystal display, LCD), or the like.

For example, the rear housing 20 is configured to protect an internal electronic component of the electronic device 100. The rear housing 20 includes a rear cover 201 and a side frame 202. The rear cover 201 is located on a side that is of the display 102 and that is away from the transparent cover plate 101, and is stacked with the transparent cover plate 101 and the display 102. The side frame 202 is fastened to the rear cover 201. For example, the side frame 202 may be fastened to the rear cover 201 through an adhesive. Alternatively, the side frame 202 and the rear cover 201 may be an integrally formed structure, that is, the side frame 202 and the rear cover 201 are an integral structure. The side frame 202 is located between the rear cover 201 and the transparent cover plate 101. The transparent cover plate 101 may be fastened to the side frame 202 through an adhesive. The transparent cover plate 101, the rear cover 201, and the side frame 202 enclose an internal accommodation space of the electronic device 100. The internal accommodation space accommodates the display 102.

For example, the camera module 30 is configured to take a photo/video. For example, the camera module 30 may be located in the internal accommodation space of the electronic device 100. The camera module 30 may be used as a rear-facing camera module, or may be used as a front-facing camera module.

For example, a light entrance surface of the camera module 30 faces the rear cover 201. A mounting opening 2011 is disposed on the rear cover 201, and the camera decorative cover 40 covers and is fastened to the mounting opening 2011. The camera decorative cover 40 is configured to protect the camera module 30. In some embodiments, the camera decorative cover 40 protrudes to a side that is of the rear cover 201 and that is away from the transparent cover plate 101. In this way, the camera decorative cover 40 can increase a mounting space of the camera module 30 in a thickness direction of the electronic device 100. In some other embodiments, the camera decorative cover 40 may alternatively be flush with the rear cover 201 or concave to the internal accommodation space of the electronic device 100. A transparent window 401 is disposed on the camera decorative cover 40. The transparent window 401 allows scene light to be emitted into the light entrance surface of the camera module 30. In this embodiment, the camera module 30 is used as a rear-facing camera module 30 of the electronic device 100. For example, the camera module 30 may be used as a rear-facing primary camera module. In another embodiment, the camera module 30 may alternatively be used as a rear-facing wide-angle camera module or a long-focus camera module.

In another embodiment, the light entrance surface of the camera module 30 faces the transparent cover plate 101. An optical path avoidance hole is disposed on the display 102. The optical path avoidance hole allows scene light to pass through the transparent cover plate 101 and then enter the light entrance surface of the camera module 30. In this way, the camera module 30 is used as a front-facing camera module 30 of the electronic device 100.

In some embodiments, as shown in FIG. 2, the electronic device 100 further includes a circuit board 50 and an image processor 60. The circuit board 50 and the image processor 60 are located in the internal accommodation space of the electronic device 100. The image processor 60 is fastened to the circuit board 50 and is electrically connected to the circuit board 50. The image processor 60 is communicatively connected to the camera module 30. The image processor 60 is configured to obtain image data from the camera module 30, and process the image data. The communication connection between the camera module 30 and the image processor 60 may be for data transmission implemented through an electrical connection like cabling, or data transmission implemented through coupling. It may be understood that the camera module 30 may alternatively be communicatively connected to the image processor 60 in another manner in which data transmission can be implemented.

In some embodiments, the electronic device 100 may further include an analog-to-digital converter (also referred to as an A/D converter, not shown in the figure). The analog-to-digital converter is connected between the camera module 30 and the image processor 60. The analog-to-digital converter is configured to convert a signal generated by the camera module 30 into a digital image signal and transmit the digital image signal to the image processor 60. Then the image processor 60 processes the digital image signal, and finally displays an image or a video on the screen 10.

In some embodiments, the electronic device 100 may further include a memory (not shown in the figure). The memory is communicatively connected to the image processor 60. The image processor 60 processes the digital image signal, and then transmits the image to the memory. In this way, when the image needs to be viewed subsequently, the image can be found from the memory at any time and displayed on the screen 10. In some embodiments, the image processor 60 further compresses a processed digital image signal, and then stores a compressed digital image signal in the memory, to save a space of the memory.

In another embodiment, the electronic device 100 may not include the screen 10 and/or the camera decorative cover 40.

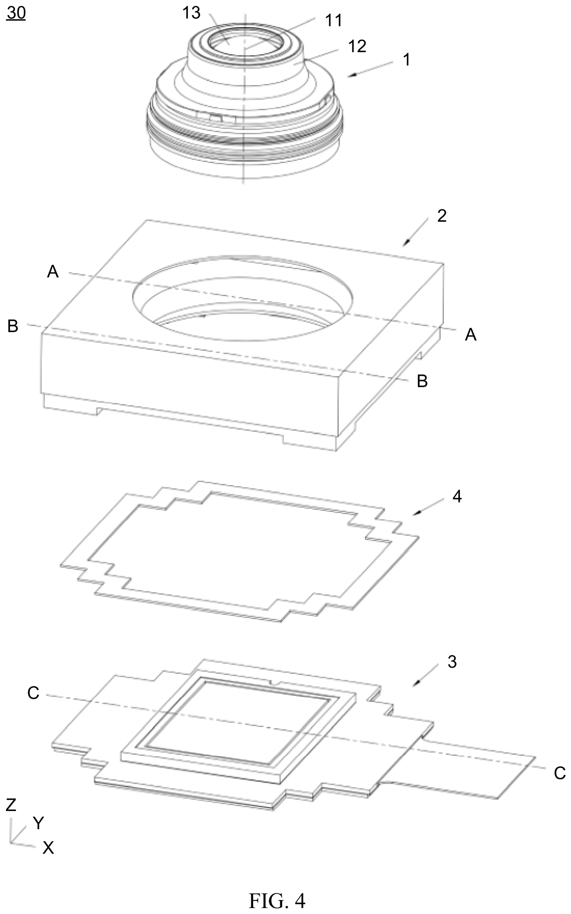

Refer to FIG. 3 and FIG. 4. FIG. 3 is a diagram of a structure of the camera module 30 shown in FIG. 2 in some embodiments, and FIG. 4 is a diagram of a partial exploded structure of the camera module 30 shown in FIG. 3. It may be understood that FIG. 3 and FIG. 4 merely show examples of some components included in the camera module 30, and actual shapes, actual sizes, actual positions, and actual structures of these components are not limited by FIG. 3 and FIG. 4. The camera module 30 may alternatively include more or fewer components than those in FIG. 3 and FIG. 4.

For ease of description below, a length direction of the camera module 30 is defined as a first direction X, a width direction of the camera module 30 is defined as a second direction Y, the second direction Y is perpendicular to the first direction X, a height direction of the camera module 30 is defined as a third direction Z, and the third direction Z is perpendicular to the first direction X and the second direction Y. An XY plane is parallel to the first direction X and the second direction Y, an XZ plane is parallel to the first direction X and the third direction Z, and a YZ plane is parallel to the second direction Y and the third direction Z.

In some embodiments, the camera module 30 includes a lens 1, an SMA actuator 2, a photosensitive assembly 3, and a first adhesive layer 4.

The lens 1 is configured to perform imaging on a shot scene. An optical axis 11 of the lens 1 is parallel to the third direction Z of the camera module 30. The lens 1 may include a lens barrel 12 and an optical lens element group 13. The optical lens element group 13 is fastened to an inner side of the lens barrel 12, and the lens barrel 12 is configured to fasten and protect the optical lens element group 13. The optical lens element group 13 includes at least one optical lens element. When the optical lens element group 13 includes a plurality of optical lens elements, the plurality of optical lens elements are stacked in a direction of the optical axis 11 of the lens 1. By designing a structure and a parameter of the optical lens element group 13, lenses with different features such as a wide-angle lens, a standard lens, and a telephoto lens may be obtained.

The lens 1 is fastened to the SMA actuator 2. The SMA actuator 2 is configured to drive the lens 1 to move, to implement automatic focusing (automatic focusing, AF) and/or optical image stabilization (optical image stabilization, OIS). For example, the SMA actuator 2 may be configured to drive the lens 1 to move in the third direction Z, to implement automatic focusing. The SMA actuator 2 may also be configured to drive the lens 1 to move on the XY plane or tilt in any direction around, to implement optical image stabilization. The SMA actuator 2 may be further configured to implement both automatic focusing and optical image stabilization. This is not specifically limited herein. The SMA actuator 2 may be fastened to the photosensitive assembly 3 through the first adhesive layer 4.

In some embodiments, the camera module 30 may further include a variable aperture (variable aperture, VA) (not shown in the figure). The variable aperture has an aperture hole, the aperture hole is located on a light entrance side of the lens 1, and a size of the aperture hole is variable. The variable aperture is configured to adjust an amount of light entering the camera module 30, so that the camera module 30 can maintain constant image shooting quality under a plurality of brightness conditions. In a high-brightness environment, the size of the aperture hole may be reduced, so that a small amount of light enters the lens 1. In a low-brightness environment, the size of the aperture hole may be expanded, so that a large amount of light enters the lens 1. In this way, an amount of light entering the lens 1 is adjusted, and image shooting quality of the camera module 30 is ensured. In some embodiments, the variable aperture is fastened to the lens 1 to be fastened relative to the lens 1, so that the variable aperture can move synchronously with the lens 1. In this way, a position of the aperture hole relative to the lens 1 remains unchanged. This ensures image shooting quality of the camera module 30. In another embodiment, the variable aperture may alternatively be fastened to another component of the camera module 30, for example, fastened to a carrier of the SMA actuator 2.

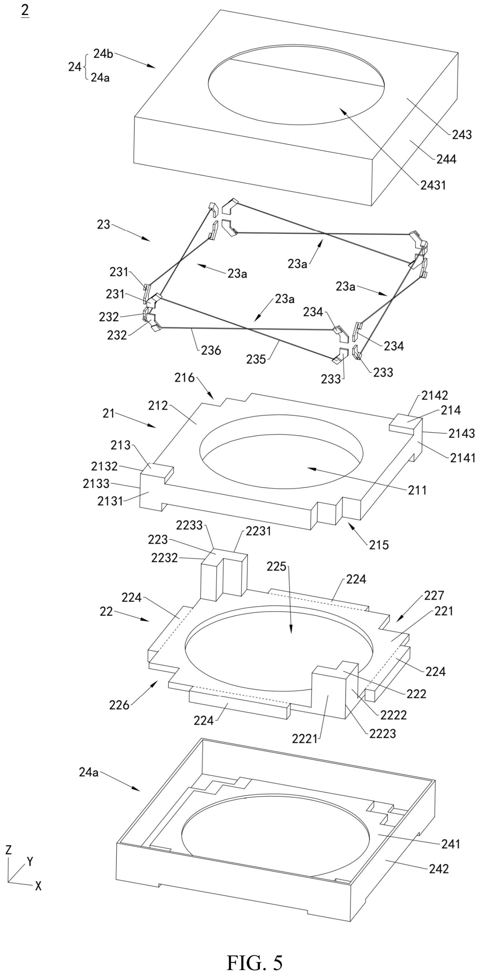

Refer to FIG. 5. FIG. 5 is a diagram of a structure of the SMA actuator 2 shown in FIG. 4 in some embodiments FIG. 5 shows examples of some components included in the SMA actuator 2. Actual shapes, actual sizes, actual positions, and actual structures of these components are not limited by FIG. 5. The SMA actuator 2 may alternatively include more or fewer components than those in FIG. 5.

In some embodiments, the SMA actuator 2 includes a carrier 21, a base 22, an SMA actuation component 23, and a housing 24.

For example, the carrier 21 has a lens mounting hole 211, and two ends of the lens mounting hole 211 are opened. The lens 1 is mounted in the lens mounting hole 211 of the carrier 21, to be fastened to the carrier 21. In some embodiments, the lens 1 may be mounted in the lens mounting hole 211 in a detachable connection manner like clamping or threaded connection, to facilitate replacement of the lens 1. When the lens 1 is mounted in the lens mounting hole 211, an extension direction of the optical axis 11 of the lens 1 is consistent with an axial direction of the lens mounting hole 211. In some other embodiments, the lens 1 may alternatively be mounted in the lens mounting hole 211 in a non-detachable manner like bonding, to improve connection stability and firmness. A forming material of the carrier 21 may include but is not limited to metal and plastic. In some embodiments, the forming material of the carrier 21 is plastic.

The carrier 21 may have an axial direction and a circumferential direction. The axial direction of the carrier 21 is parallel to the optical axis 11 of the lens 1, that is, parallel to the third direction Z. The circumferential direction of the carrier 21 is set around the axial direction of the carrier 21.

For example, the carrier 21 may include a first body 212, a first connecting post 213, and a second connecting post 214. A shape of the first body 212 may be similar to a plate body with a round interior and a square exterior. The lens mounting hole 211 is formed on an inner side of the first body 212. For example, the first body 212 may include four first corner portions and four first side portions. The four first side portions and the four first corner portions are alternately arranged one by one in the circumferential direction of the carrier 21, and surround a periphery of the lens mounting hole 211. Two first side portions are disposed opposite to each other, and the other two first side portions are also disposed opposite to each other. Two first corner portions are arranged diagonally, and the other two first corner portions are also arranged diagonally. The first connecting post 213 and the second connecting post 214 are respectively fastened to two first corner portions that are arranged diagonally, and a first notch 215 and a second notch 216 are respectively disposed on the other two first corner portions that are arranged diagonally.

The first connecting post 213 may include a first side surface 2131 and a fourth side surface 2132 that are disposed adjacent to each other, and a first edge line 2133 is formed at an intersection of the first side surface 2131 and the fourth side surface 2132. In some embodiments, the first side surface 2131 may be coplanar with one outer side surface of the first body 212, and the fourth side surface 2132 may be coplanar with another outer side surface of the first body 212. The second connecting post 214 may include a second side surface 2141 and a third side surface 2142, and a second edge line 2143 is formed at an intersection of the second side surface 2141 and the third side surface 2142. In some embodiments, the second side surface 2141 may be coplanar with another outer side surface of the first body 212, and the third side surface 2142 may be coplanar with another outer side surface of the first body 212.

In the axial direction of the carrier 21, a height of the first connecting post 213 and a height of the second connecting post 214 may be greater than a height of the first body 212. Two ends of the first connecting post 213 and two ends of the second connecting post 214 may protrude relative to two surfaces of the first body 212, or one end of the first connecting post 213 and one end of the second connecting post 214 protrude relative to one surface of the first body 212.

The first notch 215 and the second notch 216 each may be a space that is recessed from an outer side surface of the first body 212 to the inside of the first body 212, and the first notch 215 and the second notch 216 penetrate the first body 212 in the axial direction of the carrier 21. Wall surfaces of the first notch 215 and the second notch 216 may be in a step shape or another shape.

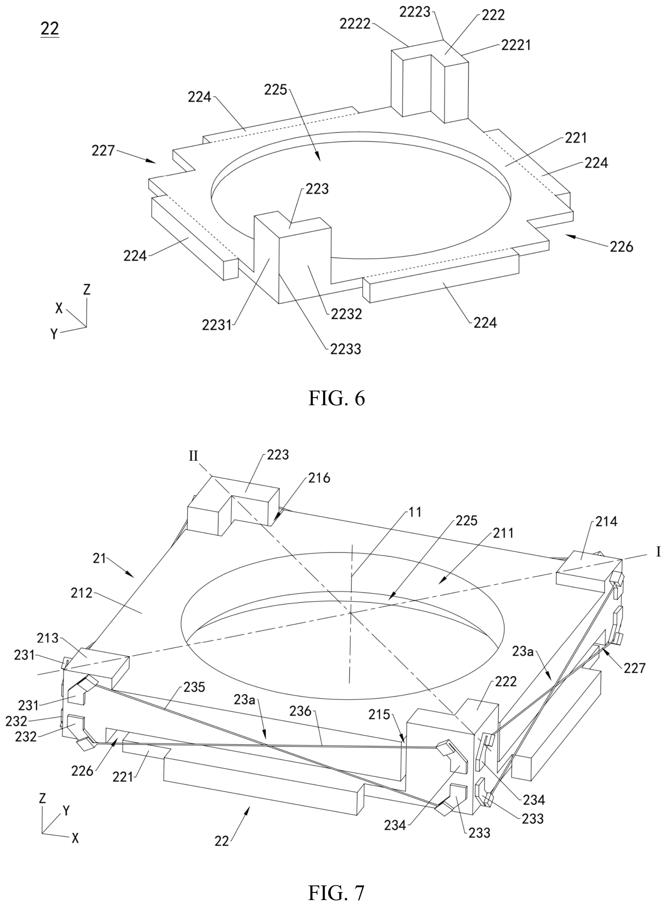

Refer to FIG. 5 and FIG. 6. FIG. 6 is a diagram of a structure of the base 22 shown in FIG. 5 from another perspective.

In some embodiments, the base 22 may include a second body 221, a third connecting post 222, a fourth connecting post 223, and at least one epitaxial portion 224. A shape of the second body 221 may be similar to a plate body with a round interior and a square exterior. A movable hole 225 is formed on an inner side of the second body 221, and the movable hole 225 penetrates the second body 221 in an axial direction of the base 22. For example, the second body 221 may include four second corner portions and four second side portions. The four second side portions and the four second corner portions are alternately arranged one by one in a circumferential direction of the base 22, and surround a periphery of the movable hole 225. Two second side portions are disposed opposite to each other, and the other two second side portions are also disposed opposite to each other. Two second corner portions are arranged diagonally, and the other two second corner portions are also arranged diagonally. The third connecting post 222 and the fourth connecting post 223 are respectively fastened to two second corner portions that are arranged diagonally, and a third notch 226 and a fourth notch 227 are respectively disposed on the other two second corner portions that are arranged diagonally.

In the axial direction of the base 22, a height of the third connecting post 222 and a height of the fourth connecting post 223 are greater than a height of the second body 221. The third connecting post 222 and the fourth connecting post 223 may protrude toward a side of the second body 221 relative to the second body 221.

The third connecting post 222 may include a first fastening surface 2221 and a second fastening surface 2222 that are disposed adjacent to each other, and a third edge line 2223 is formed at an intersection of the first fastening surface 2221 and the second fastening surface 2222. In some embodiments, the first fastening surface 2221 may be coplanar with an outer side surface of the second body 221, and the second fastening surface 2222 may be coplanar with another outer side surface of the second body 221. The fourth connecting post 223 may include a third fastening surface 2231 and a fourth fastening surface 2232, and a fourth edge line 2233 is formed at an intersection of the third fastening surface 2231 and the fourth fastening surface 2232. In some embodiments, the third fastening surface 2231 may be coplanar with another outer side surface of the second body 221, and the fourth fastening surface 2232 may be coplanar with another outer side surface of the second body 221.

The third notch 226 and the fourth notch 227 each may be a space that is recessed from an outer side surface of the second body 221 to the inside of the second body 221, and the third notch 226 and the fourth notch 227 penetrate the second body 221 in the axial direction of the base 22. Wall surfaces of the third notch 226 and the fourth notch 227 may be in a step shape or another shape.

There may be one or more epitaxial portions 224. In the following embodiment, an example in which there are four epitaxial portions 224 is used for description. The four epitaxial portions 224 are respectively fastened to four outer side surfaces of the second side portions. In the axial direction of the base 22, a size of the epitaxial portion 224 is greater than a size of the second body 221. The at least one epitaxial portion 224 is provided with an exposed gold finger (not shown in the figure). For example, gold fingers are disposed on both of the two epitaxial portions 224 that are disposed opposite to each other. In another embodiment, there may be two epitaxial portions 224, and the two epitaxial portions 224 may be disposed opposite to each other. Because a height of the epitaxial portion 224 is large, there is a sufficient space for arranging a gold finger and another electrical connection structure.

In some embodiments, the base 22 may include an insulation portion and a conductive portion. The conductive portion may be embedded in the insulation portion, and the conductive portion is configured to provide an electrical connection structure. The conductive portion may also form the gold finger, and the electrical connection structure is connected to the gold finger. The insulation portion may be made of an insulation material like plastic. The conductive portion may be made of a metal material, for example, steel or copper.

Refer to FIG. 5 and FIG. 7. FIG. 7 is a diagram of a partial structure of the SMA actuator 2 shown in FIG. 4.

In some embodiments, the carrier 21 and the base 22 are assembled, and the axial direction of the base 22 coincides with the axial direction of the carrier 21, that is, both are parallel to the optical axis 11 of the lens 1 and parallel to the third direction Z. The first body 212 of the carrier 21 and the second body 221 of the base 22 are stacked in the third direction Z, and the movable hole 225 of the second body 221 directly faces and communicates with the lens mounting hole 211 of the first body 212. The four first corner portions of the first body 212 are disposed in a one-to-one correspondence with the four second corner portions of the second body 221. The first connecting post 213 of the carrier 21 is partially located in the third notch 226 of the base 22, the second connecting post 214 of the carrier 21 is partially located in the fourth notch 227 of the base 22, the third connecting post 222 of the base 22 is partially located in the first notch 215 of the carrier 21, and the fourth connecting post 223 of the base 22 is partially located in the second notch 216 of the carrier 21.

For example, the SMA actuation component 23 is connected to the carrier 21 and the base 22, and the SMA actuation component 23 is configured to drive the carrier 21 to move relative to the base 22, to implement automatic focusing and/or optical image stabilization. Specifically, the SMA actuation component 23 is connected between the carrier 21 and the base 22. The SMA actuation component 23 supports the carrier 21 on the base 22, and the SMA actuation component 23 is further configured to drive the carrier 21 and the lens 1 to move together in the third direction Z, to implement automatic focusing. Alternatively, the SMA actuation component 23 is configured to drive the carrier 21 and the lens 1 to move together in the XY plane or tilt in any direction around, to implement optical image stabilization.

For example, the SMA actuation component 23 includes four groups of actuation units 23a, and the four groups of actuation units 23a are evenly arranged around the circumferential direction of the carrier 21. Each group of actuation units 23a includes a pair of movable clamping jaws (231 and 232), a pair of static clamping jaws (233 and 234), and two SMA wires (235 and 236). The pair of movable clamping jaws (231 and 232) is fastened to the carrier 21, the pair of static clamping jaws (233 and 234) is fastened to the base 22, the pair of movable clamping jaws (231 and 232) and the pair of static clamping jaws (233 and 234) are spaced in the circumferential direction of the carrier 21, and the two SMA wires (235 and 236) are cross-connected to the pair of movable clamping jaws (231 and 232) and the pair of static clamping jaws (233 and 234). The pair of movable clamping jaws (231 and 232) includes a first movable clamping jaw 231 and a second movable clamping jaw 232, and the pair of static clamping jaws (233 and 234) includes a first static clamping jaw 233 and a second static clamping jaw 234. The two SMA wires (235 and 236) include a first SMA wire 235 and a second SMA wire 236. The first SMA wire 235 is connected to the first movable clamping jaw 231 and the first static clamping jaw 233, the second SMA wire 236 is connected to the second movable clamping jaw 232 and the second static clamping jaw 234, and the first SMA wire 235 intersects the second SMA wire 236.

In the circumferential direction of the carrier 21, pairs of movable clamping jaws (231 and 232) of two adjacent groups of actuation units 23a are adjacently disposed, or pairs of static clamping jaws (233 and 234) of two adjacent groups of actuation units 23a are adjacently disposed. For example, the movable clamping jaws (231 and 232) of the four groups of actuation units 23a are fastened to the first connecting post 213 and the second connecting post 214. The movable clamping jaws (231 and 232) of the two groups of actuation units 23a are fastened to the first connecting post 213, and the movable clamping jaws (231 and 232) of the other two groups of actuation units 23a are fastened to the second connecting post 214. Specifically, a pair of movable clamping jaws (231 and 232) of a group of actuation units 23a is fastened to the first side surface 2131 of the first connecting post 213, a pair of movable clamping jaws (231 and 232) of another group of actuation units 23a is fastened to the fourth side surface 2132 of the first connecting post 213, a pair of movable clamping jaws (231 and 232) of another group of actuation units 23a is fastened to the second side surface 2141 of the second connecting post 214, and a pair of movable clamping jaws (231 and 232) of another group of actuation units 23a is fastened to the third side surface 2142 of the second connecting post 214.

The static clamping jaws (233 and 234) of the four groups of actuation units 23a are fastened to the third connecting post 222 and the fourth connecting post 223. The static clamping jaws (233 and 234) of the two groups of actuation units 23a are fastened to the third connecting post 222, and the static clamping jaws (233 and 234) of the other two groups of actuation units 23a are fastened to the fourth connecting post 223. Specifically, a pair of static clamping jaws (233 and 234) of a group of actuation units 23a is fastened to the first fastening surface 2221 of the third connecting post 222, a pair of static clamping jaws (233 and 234) of another group of actuation units 23a is fastened to the second fastening surface 2222 of the third connecting post 222, a pair of static clamping jaws (233 and 234) of another group of actuation units 23a is fastened to the third fastening surface 2231 of the fourth connecting post 223, and a pair of static clamping jaws (233 and 234) of another group of actuation units 23a is fastened to the fourth fastening surface 2232 fastened to the fourth connecting post 223.

The SMA wires (235 and 236) shrink when being electrified and heated. The SMA wires (235 and 236) are made of a shape memory alloy (Shape Memory Alloy, SMA) material, for example, a nickel-titanium alloy material. Shape memory alloys are a kind of metals with a shape memory effect. Generally, after the metal material is subject to an external force, elastic deformation occurs first. In this case, if the external force is removed, the metal restores to an original shape. If the external force continues to be increased, plastic deformation occurs after the metal reaches a yield point of the metal. After the external force is eliminated, permanent deformation occurs, and shape recovery does not occur even if heating is performed. The shape memory alloy is a kind of alloy material which can completely eliminate, after heating and a temperature rise, its deformation at a lower temperature and restore its original shape before deformation. A basic operating principle of the shape memory alloy material is to heat the material to a critical temperature or higher for shape memory heat treatment (training), and make the material deform to some extent. When the material is cooled to form a martensite phase and then is heated again to the critical temperature or higher, the low-temperature martensite phase is reversed to a high-temperature austenite phase (that is, reverse transformation occurs), so that the material returns to its remembered pre-deformed state.

In this embodiment, when the SMA wires (235 and 236) are energized, heat generated by energization causes a temperature of the SMA wires (235 and 236) to increase, so that the low-temperature martensite phase is reversed to the high-temperature austenite phase, and the material before degeneration is restored. In this way, the SMA wires (235 and 236) shrink. A length change caused by the shrinkage of the SMA wires (235 and 236) is essentially caused by conversion of a crystal phase structure of the material, namely, conversion between martensite and austenite. However, a gravitational force between microscopic particles due to a crystal structure change (namely, atom-to-atom gap transformation) makes a pulling force generated when the macro SMA wires (235 and 236) shrink much greater than an electromagnetic force between common magnet coils. Therefore, the shrinkage of the SMA wires (235 and 236) can drive a heavier load, that is, can implement a large load. Therefore, the SMA actuator 2 can have a large driving force in a small size.

In this embodiment, because the SMA wires (235 and 236) shrink when the SMA wires (235 and 236) are energized and heated, a resultant force generated by the eight SMA wires on the carrier 21 can be directed in a desired direction by controlling electrical signals of the eight SMA wires (235 and 236), to drive the carrier 21 and the lens 1 to move. For example, the eight SMA wires (235 and 236) may generate a resultant force in the third direction Z, so that the carrier 21 drives the lens 1 to move in the third direction Z, to implement focusing. Alternatively, the eight SMA wires (235 and 236) may generate a resultant force on the XY plane. In this way, the carrier 21 drives the lens 1 to move on the XY plane, to implement optical image stabilization. In this embodiment, the SMA actuator 2 has a simple structure, a large driving force, and a small volume, so that both automatic focusing and optical image stabilization can be implemented, and a volume of the camera module 30 can be reduced.

For example, to ensure smooth movement of the carrier 21 relative to the base 22, a shape of a wall surface of the connecting post adapts to a shape of a wall surface of the notch. For example, a shape of a wall surface on a side that is of the first connecting post 213 and that faces the third notch 226 adapts to a shape of a wall surface of the third notch 226, for example, is also a step surface. A shape of a wall surface on a side that is of the second connecting post 214 and that faces the fourth notch 227 adapts to a shape of a wall surface of the fourth notch 227, for example, is also a step surface. A shape of a wall surface on a side that is of the third connecting post 222 and that faces the first notch 215 adapts to a shape of a wall surface of the first notch 215, for example, is also a step surface. A shape of a wall surface on a side that is of the fourth connecting post 223 and that faces the second notch 216 adapts to a shape of a wall surface of the second notch 216, for example, is also a step surface. There is a gap between the wall surface of the connection rod and the wall surface of the notch, and the gap makes the carrier 21 to move relative to the base 22 on the XY plane or tilt in any direction around, to implement optical image stabilization. When the carrier 21 moves by a specific distance relative to the base 22 on the XY plane or tilts by a specific angle in any direction around, the wall surface of the connecting post is in contact with the wall surface of the notch, to prevent the carrier 21 from continuing to move, so as to limit a maximum movement distance and a maximum tilt angle of the carrier 21.

For example, a forming material of the movable clamping jaws (231 and 232) may be a conductive material, or may be an insulating material. In some embodiments, the forming material of the movable clamping jaws (231 and 232) is a conductive material, for example, metal. In this way, the movable clamping jaws (231 and 232) may be used as wiring terminals of first electrodes of the SMA wires (235 and 236), to facilitate wiring of the SMA wires (235 and 236). The first electrode is one of a positive electrode and a negative electrode. A forming material of the static clamping jaws (233 and 234) may be a conductive material, or may be an insulating material. In some embodiments, the forming material of the static clamping jaws (233 and 234) is a conductive material, for example, metal. In this way, the static clamping jaws (233 and 234) may be used as wiring terminals of second electrodes of the SMA wires (235 and 236), to facilitate wiring of the SMA wires (235 and 236). The second electrode is the other of the positive electrode and the negative electrode.

In the foregoing embodiment, the first movable clamping jaw 231 and the second movable clamping jaw 232 are structural members independent of each other, to supply power to the first SMA wire 235 and the second SMA wire 236 respectively. In another embodiment, the first movable clamping jaw 231 and the second movable clamping jaw 232 may alternatively be connected to form an integral structure, to simplify structural composition of the SMA actuator 2 and facilitate assembly.

In addition, a height of the first connecting post 213 and a height of the second connecting post 214 of the carrier 21 are greater than a height of the first body 212. In this case, it can be ensured that a height from the first movable clamping jaw 231 to the second movable clamping jaw 232 (namely, a height of the clamping jaw) meets a design requirement, and a gap can be further formed between the first body 212 and the second body 221 of the base 22, so that the carrier 21 can move relative to the base 22 in the third direction Z. In another embodiment, the height of the first connecting post 213 and the height of the second connecting post 214 may alternatively be equal to or less than the height of the first body 212.

In addition, in the foregoing embodiment, both structures and an assembly structure of the carrier 21, the base 22, and the four groups of actuation units 23a may be symmetrical relative to a first plane and symmetrical relative to a second plane, to improve stability and reliability of driving of the SMA actuator 2. An arrangement direction I of the first connecting post 213 and the second connecting post 214 and the axial direction of the carrier 21 may jointly define the first plane, an arrangement direction II of the third connecting post 222 and the fourth connecting post 223 and the axial direction of the carrier 21 may jointly define the second plane, and the second plane may be perpendicular to the first plane.

In another embodiment, the carrier 21 and the base 22 may alternatively have other structures, and an assembly structure of the actuation component, the carrier 21, and the base 22 may alternatively have another implementation. For example, both structures and an assembly structure of the carrier 21, the base 22, and the four groups of actuation units 23a may be designed as centrosymmetric structures centered on the optical axis 11 of the lens 1. In this case, four connecting posts may be disposed on the carrier 21 and the base 22. The structures and the assembly structure of the carrier 21, the base 22, and the four groups of actuation units 23a are not strictly limited in embodiments of this application.

Refer to FIG. 5 again. The housing 24 may be formed by assembling a plurality of portions. In some embodiments, the housing 24 includes a lower cover 24a and an upper cover 24b. The lower cover 24a and the upper cover 24b are assembled and fitted, to cover the carrier 21, the base 22, and the SMA actuation component 23, so as to implement protection and dustproof.

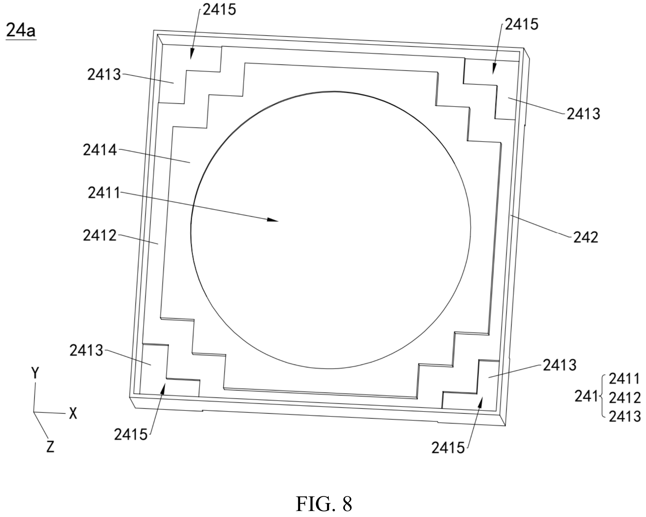

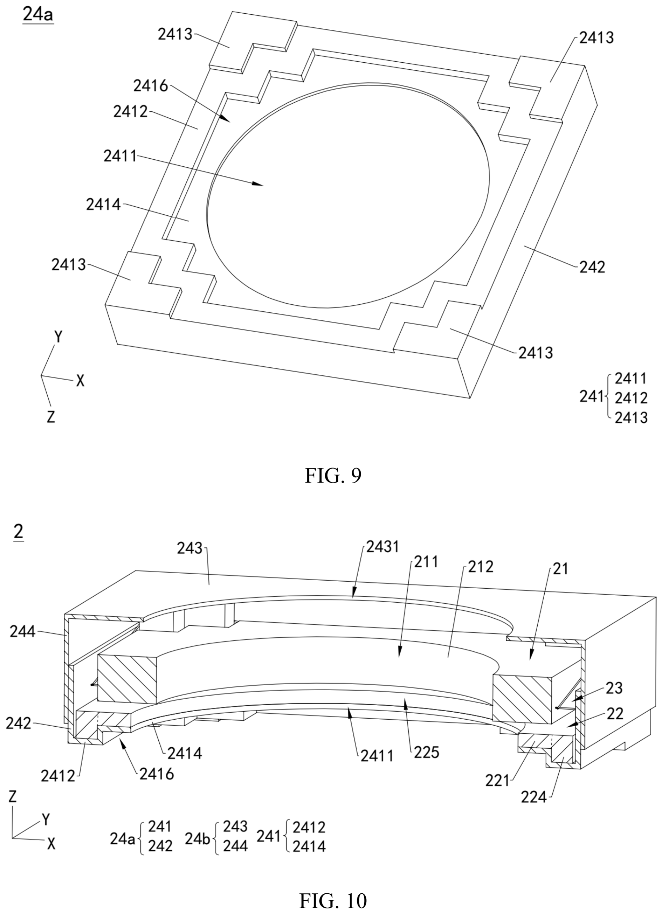

Refer to FIG. 5, FIG. 8, and FIG. 9. FIG. 8 is a diagram of a structure of the lower cover 24a shown in FIG. 5 from another perspective, and FIG. 9 is a diagram of a structure of the lower cover 24a shown in FIG. 8 from another perspective.

In some embodiments, the lower cover 24a may include a bottom plate 241 and a first side plate 242, a first through hole 2411 is disposed in the middle of the bottom plate 241, and the first side plate 242 is connected to a peripheral edge of the bottom plate 241. For example, the bottom plate 241 may include a first portion 2412 and four second portions 2413. The first portion 2412 is disposed around the first through hole 2411. The first portion 2412 may be of a continuous structure. For example, a shape of the first portion 2412 may be similar to a frame-shaped plate body. The first portion 2412 may include four side portions and four corner portions. The four side portions and the four corner portions are alternately arranged one by one in a circumferential direction of the lower cover 24a. Two of the side portions are disposed opposite to each other, the other two of the side portions are disposed opposite to each other, two of the corner portions are disposed diagonally, and the remaining corner portions are also disposed diagonally. The side portion may have a straight side, and the corner portion may be in a step shape or a fold line shape. The four second portions 2413 are spaced on an outer peripheral side of the first portion 2412. For example, the four second portions 2413 may be respectively disposed on outer sides of the four corner portions of the first portion 2412. The second portion 2413 may be L-shaped.

For example, the bottom plate 241 may further include a third portion 2414, the third portion 2414 is located on an inner side of the first portion 2412, and the first through hole 2411 is formed on the third portion 2414. A shape of the third portion 2414 may be similar to a plate body with a round interior and a square exterior. The first portion 2412 may include four side portions and four corner portions. The four side portions and the four corner portions are alternately arranged one by one in a circumferential direction of the lower cover 24a. Two of the side portions are disposed opposite to each other, the other two of the side portions are disposed opposite to each other, two of the corner portions are disposed diagonally, and the remaining corner portions are also disposed diagonally.

In this embodiment, an axial direction of the lower cover 24a is parallel to the third direction Z. In the third direction Z, the third portion 2414, the first portion 2412, and the second portion 2413 of the bottom plate 241 sequentially form step differences. As shown in FIG. 8, on a side close to the first side plate 242, a top surface of the third portion 2414, a top surface of the first portion 2412, and a top surface of the second portion 2413 sequentially form step differences, to jointly form a step surface. The top surface of the first portion 2412 sinks relative to the top surface of the third portion 2414, and the top surface of the second portion 2413 sinks relative to the top surface of the first portion 2412. As shown in FIG. 9, on a side away from the first side plate 242, a bottom surface of the second portion 2413, a bottom surface of the first portion 2412, and a bottom surface of the third portion 2414 sequentially form step differences, to jointly form a step surface. The bottom surface of the first portion 2412 sinks relative to the bottom surface of the second portion 2413, and the bottom surface of the third portion 2414 sinks relative to the bottom surface of the first portion 2412.

As shown in FIG. 8, on the side close to the first side plate 242, the four second portions 2413 are recessed relative to the first portion 2412, and four first sink grooves 2415 are correspondingly formed. As shown in FIG. 9, on the side away from the first side plate 242, the third portion 2414 is recessed relative to the first portion 2412, and a second sink groove 2416 is correspondingly formed. The second sink groove 2416 is disposed around the first through hole 2411.

The bottom plate 241 may further include a first connection portion connected between the first portion 2412 and the second portion 2413, and a second connection portion connected between the first portion 2412 and the third portion 2414.

Refer to FIG. 5 again. In some embodiments, the upper cover 24b may include a top plate 243 and a second side plate 244. A second through hole 2431 is disposed in the middle of the top plate 243, and the second side plate 244 is connected to a peripheral edge of the top plate 243. The top plate 243 may be in a flat plate shape.

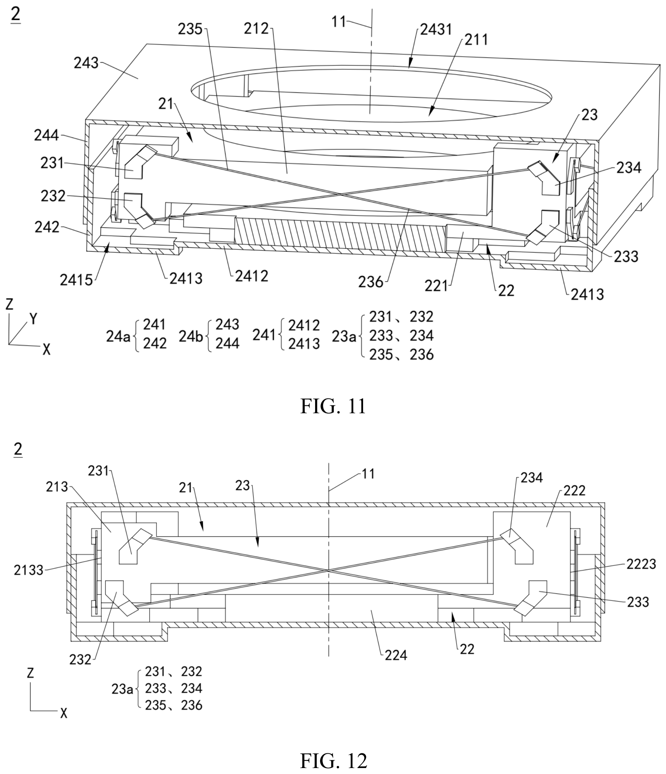

Refer to FIG. 7, FIG. 10, and FIG. 11. FIG. 10 is a cross-sectional diagram of a structure of the SMA actuator 2 shown in FIG. 4 cut along A-A. FIG. 11 is a cross-sectional diagram of a structure of the SMA actuator 2 shown in FIG. 4 cut along B-B.

In some embodiments, the top plate 243 and the bottom plate 241 of the housing 24 are disposed opposite to each other, and are arranged in the third direction Z. The first through hole 2411 is disposed directly facing the second through hole 2431. The first side plate 242 and the second side plate 244 are located between the top plate 243 and the bottom plate 241, and the first side plate 242 is fastened to the second side plate 244, so that the upper cover 24b is engaged with and fastened to the lower cover 24a. For example, the first side plate 242 and the second side plate 244 may be fastened together through threaded connection, clamping, adhesive bonding, or the like. In another embodiment, the second side plate 244 may not be disposed on the upper cover 24b, or the first side plate 242 may not be disposed on the lower cover 24a, and the bottom plate 241 is connected to the top plate 243 through one side plate. A specific structure of the housing 24 is not strictly limited in embodiments of this application.

A distance between the third portion 2414 of the bottom plate 241 and the top plate 243 is less than a distance between the first portion 2412 of the bottom plate 241 and the top plate 243. In other words, the third portion 2414 of the bottom plate 241 sinks relative to the first portion 2412 of the bottom plate 241 in a direction close to the top plate 243, and the second sink groove 2416 is disposed against the top plate 243. A distance between the second portion 2413 of the bottom plate 241 and the top plate 243 is greater than the distance between the first portion 2412 of the bottom plate 241 and the top plate 243. In other words, the second portion 2413 of the bottom plate 241 sinks relative to the first portion 2412 of the bottom plate 241 in a direction away from the top plate 243, and the first sink groove 2415 is disposed toward the top plate 243. In this case, four corner regions (corresponding to the second portions 2413 of the bottom plate 241) of the housing 24 of the SMA actuator 2 have a large height, a first encircling region (corresponding to the first portion 2412 of the bottom plate 241) that extends inward at four corners of the housing 24 has a medium height, and a second encircling region (corresponding to the third portion 2414 of the bottom plate 241) that continues to extend inward from the first encircling region has a small height.

The carrier 21, the base 22, and the SMA actuation component 23 are located between the top plate 243 and the bottom plate 241. The first through hole 2411 of the bottom plate 241 and the second through hole 2431 of the top plate 243 are disposed directly facing the lens mounting hole 211 of the carrier 21 and the movable hole 225 of the base 22. The second body 221 of the base 22 is located between the first body 212 of the carrier 21 and the bottom plate 241. The base 22 is fastened to the bottom plate 241, for example, may be fastened to the third portion 2414 of the bottom plate 241. In some embodiments, the second body 221 of the base 22 is fastened to the third portion 2414 of the bottom plate 241, and the epitaxial portion 224 of the base 22 may be located between the third portion 2414 of the bottom plate 241 and the first side plate 242, and is located between the first portion 2412 of the bottom plate 241 and the top plate 243, that is, is located in a space above the first portion 2412 of the bottom plate 241. In this case, an assembly structure of the base 22 and the bottom plate 241 can fully use a space of the bottom plate 241, and reduce a height of the SMA actuator 2 in the third direction Z. The first connecting post 213 and the second connecting post 214 of the carrier 21, and the third connecting post 222 and the fourth connecting post 223 of the base 22 are respectively arranged close to the four corner regions of the housing 24. In this case, the clamping jaws of the SMA actuation component 23 are correspondingly arranged in the four corner regions of an internal space of the housing 24.

It may be understood that, to meet a driving requirement, design values of an upper stroke of the clamping jaw, a lower stroke of the clamping jaw, and a height of the clamping jaw of the SMA actuator 2 all have lower limit thresholds. A local height of the housing 24 of the SMA actuator 2 corresponding to an arrangement position of the clamping jaw needs to meet the following: A distance between the top plate 243 and the bottom plate 241 is greater than or equal to a sum of the upper stroke, the lower stroke, and the height of the clamping jaw. The upper stroke is a spacing between the top plate 243 and a clamping jaw that is in a pair of clamping jaws and that is close to the top plate 243 in the third direction Z, the lower stroke is a spacing between the bottom plate 241 and a clamping jaw that is in a pair of clamping jaws and that is close to the bottom plate 241 in the third direction Z, and a height of the clamping jaw is a spacing between two clamping jaws of a pair of clamping jaws in the third direction Z.

In this embodiment, the bottom plate 241 of the housing 24 of the SMA actuator 2 uses a step design, so that the four corner regions of the housing 24 have a maximum height, to meet the foregoing space requirement of the clamping jaw. This ensures driving performance of the SMA actuator 2. In addition, height compression is performed on an inward region of the four corners of the housing 24, to reduce a local height of the SMA actuator 2.

In some embodiments, in the same group of actuation units 23a, the second movable clamping jaw 232 is located between the first movable clamping jaw 231 and the bottom plate 241, and the first static clamping jaw 233 is located between the second static clamping jaw 234 and the bottom plate 241. In other words, in the same group of actuation units 23a, the first movable clamping jaw 231 is disposed close to the top plate 243, the second movable clamping jaw 232 is disposed close to the bottom plate 241, the second static clamping jaw 234 is disposed close to the top plate 243, and the first static clamping jaw 233 is disposed close to the bottom plate 241.

For example, the second movable clamping jaw 232 may be disposed directly facing the second portion 2413 of the bottom plate 241. In other words, when the second movable clamping jaw 232 is projected onto the bottom plate 241 in the third direction Z, a projection falls on the second portion 2413 of the bottom plate 241. In this embodiment, a distance between the second portion 2413 of the bottom plate 241 and the top plate 243 is greater than a distance between the first portion 2412 of the bottom plate 241 and the top plate 243 and a distance between the third portion 2414 of the bottom plate 241 and the top plate 243, and the second movable clamping jaw 232 is disposed directly facing the second portion 2413 of the bottom plate 241. In this way, when the distance between the second portion 2413 of the bottom plate 241 and the top plate 243 is greater than or equal to the sum of the upper stroke, the lower stroke, and the height of the clamping jaw of the SMA actuator 2, the distance between the first portion 2412 of the bottom plate 241 and the top plate 243 and the distance between the third portion 2414 of the bottom plate 241 and the top plate 243 in the housing 24 can be reduced, to reduce a local height of the SMA actuator 2. This facilitates compact arrangement of the SMA actuator 2 with another structure when the SMA actuator 2 is assembled in the camera module 30, to reduce a shoulder height of the camera module 30.

In some embodiments, in a focusing process of the SMA actuator 2, when the carrier 21 sinks relative to the base 22, the second movable clamping jaw 232 may partially extend into the first sink groove 2415.

In some embodiments, the first static clamping jaw 233 may be disposed directly facing the second portion 2413 of the bottom plate 241. In other words, in the same group of actuation units 23a, the second movable clamping jaw 232 directly faces one second portion 2413 of the bottom plate 241, and the first static clamping jaw 233 directly faces the other second portion 2413 of the bottom plate 241. Because a distance between the second portion 2413 of the bottom plate 241 and the top plate 243 is large, an arrangement space of the first static clamping jaw 233 and the second static clamping jaw 234 is sufficient. This helps ensure that a spacing between the first static clamping jaw 233 and the second static clamping jaw 234 in the third direction Z meets a design requirement.

In some embodiments, as shown in FIG. 11, an arrangement direction of the first movable clamping jaw 231 and the second movable clamping jaw 232 may be parallel to the third direction Z, that is, parallel to the optical axis 11 of the lens 1. The first SMA wire 235 and the second SMA wire 236 are equal in length, and tilt angles of the first SMA wire 235 and the second SMA wire 236 relative to the optical axis 11 of the lens 1 are equal. An arrangement direction of the first static clamping jaw 233 and the second static clamping jaw 234 may also be parallel to the optical axis 11 of the lens 1, that is, parallel to the third direction Z.

In this embodiment, the first movable clamping jaw 231 and the second movable clamping jaw 232 have a same structure, and an arrangement direction of the first movable clamping jaw 231 and the second movable clamping jaw 232 is parallel to the third direction Z, so that the first movable clamping jaw 231 and the second movable clamping jaw 232 can be symmetrically arranged from top to bottom, to reduce an assembly requirement and facilitate commissioning. In this way, an assembly yield of the SMA actuator 2 is high. The first static clamping jaw 233 and the second static clamping jaw 234 have a same structure, and an arrangement direction of the first static clamping jaw 233 and the second static clamping jaw 234 is parallel to the third direction Z, so that the first static clamping jaw 233 and the second static clamping jaw 234 can be symmetrically arranged from top to bottom, to reduce an assembly requirement, and facilitate commissioning. In this way, an assembly yield of the SMA actuator 2 is high.

A pair of movable clamping jaws (231 and 232) and a pair of static clamping jaws (233 and 234) of the SMA actuation component 23 may alternatively be symmetrically arranged on a left side and a right side, that is, symmetrical relative to the XZ plane or symmetrical relative to the YZ plane. This further reduces an assembly requirement and commissioning difficulty, and improves an assembly yield of the SMA actuator 2.

It may be understood that, in the camera module 30, after an image target surface and a specification of the lens are determined, to ensure image quality, elements such as lengths and angles (namely, included angles with the optical axis 11 of the lens 1) of a plurality of SMA wires (235 and 236) of the SMA actuator 2 are also determined. Therefore, the actuation unit 23a of the SMA actuator 2 needs to be designed while the lengths and angles of the plurality of SMA wires (235 and 236) are maintained. In this embodiment of this application, when the local height of the SMA actuator 2 is reduced, that is, when the distance between the first portion 2412 of the bottom plate 241 and the top plate 243 and the distance between the third portion 2414 of the bottom plate 241 and the top plate 243 are reduced, a component whose position needs to be changed in the SMA actuator 2 does not interfere with the plurality of SMA wires (235 and 236). For example, the base 22 moves upward in a direction close to the top plate 243 with the third portion 2414 of the bottom plate 241, and the epitaxial portion 224 of the base 22 may touch the plurality of SMA wires (235 and 236). However, because the epitaxial portion 224 of the base 22 needs to be arranged with a gold finger to ensure an electrical connection, a size of the epitaxial portion 224 is difficult to be reduced. Therefore, in this embodiment of this application, to ensure that a gap is always kept between the base 22 and the plurality of SMA wires (235 and 236), positions of the movable clamping jaws (231 and 232), the SMA wires (235 and 236), and the static clamping jaws (233 and 234) are designed. For example, the SMA wires (235 and 236) are translated, so that the SMA wires (235 and 236) avoid the epitaxial portion 224 of the base 22.

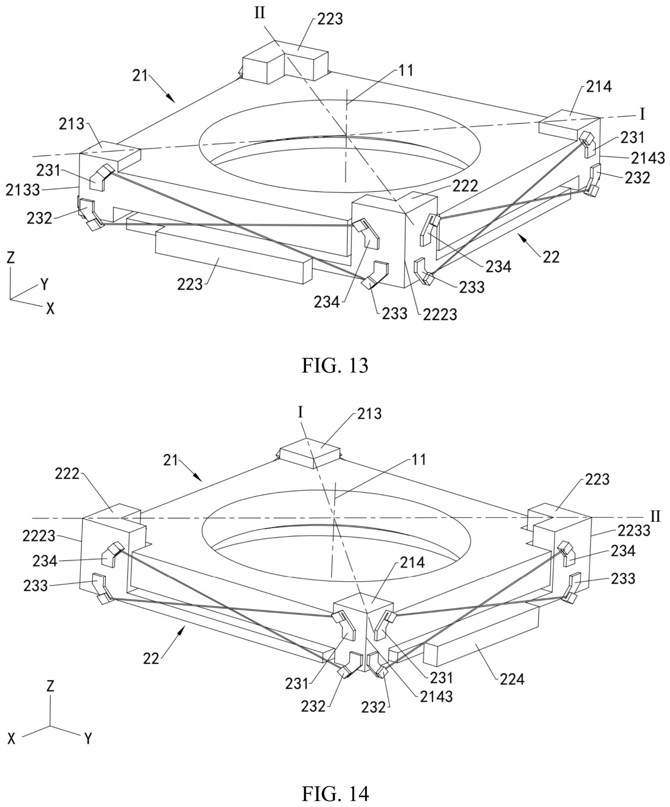

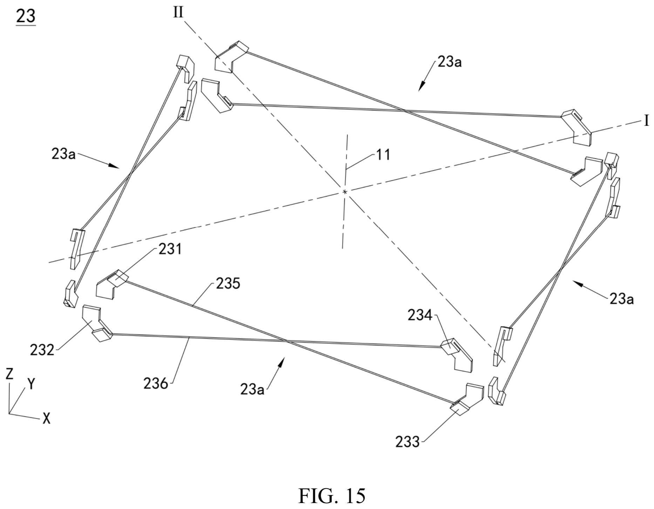

Refer to FIG. 12 to FIG. 15. FIG. 12 is a diagram of an internal structure of the SMA actuator 2 shown in FIG. 4 in some other embodiments, FIG. 13 is a diagram of a structure of the SMA actuation component 23 of the SMA actuator 2 shown in FIG. 12, FIG. 14 is a diagram of a structure of the SMA actuation component 23 shown in FIG. 13 from another perspective, and FIG. 15 is a diagram of a structure of the four groups of actuation units 23a of the SMA actuation component 23 shown in FIG. 13. The SMA actuator 2 in embodiments may include most technical features of the SMA actuator 2 in the foregoing embodiment. The following mainly describes differences between the two, and same parts of the two are not described again.

In some embodiments, in the same group of actuation units 23a fastened to the first connecting post 213 of the carrier 21, a distance between the second movable clamping jaw 232 and the first edge line 2133 is less than a distance between the first movable clamping jaw 231 and the first edge line 2133. In the same group of actuation units 23a fastened to the third connecting post 222 of the base 22, a distance between the first static clamping jaw 233 and the third edge line 2223 is less than a distance between the second static clamping jaw 234 and the third edge line 2223. Similarly, in the same group of actuation units 23a fastened to the second connecting post 214, a distance between the second movable clamping jaw 232 and the second edge line 2143 is less than a distance between the first movable clamping jaw 231 and the second edge line 2143. In the same group of actuation units 23a fastened to the fourth connecting post 223, a distance between the first static clamping jaw 233 and the fourth edge line 2233 is less than a distance between the second static clamping jaw 234 and the fourth edge line 2233.

In this embodiment, both the movable clamping jaws (231 and 232) and the static clamping jaws (233 and 234) of the SMA actuation component 23 are asymmetrically arranged from top to bottom, and the plurality of SMA wires (235 and 236) are perpendicular to the third direction Z, and are translated in a direction away from the epitaxial portion 224 of the base 22, to avoid the epitaxial portion 224 of the base 22. A gap is always kept between the plurality of SMA wires (235 and 236) and the epitaxial portion 224 of the base 22. In this way, reliability of working of the SMA actuator 2 is ensured. In addition, because a space around the first edge line 2133 and the second edge line 2143 is a reserved movement space of the clamping jaw, and the space is large, moving the movable clamping jaw toward the space helps improve space utilization of the SMA actuator 2.

For example, the four groups of actuation units 23a may be symmetrical relative to the first plane and symmetrical relative to the second plane, to improve stability and reliability of driving of the SMA actuator 2. An arrangement direction I of the first connecting post 213 and the second connecting post 214 and the axial direction of the carrier 21 may jointly define the first plane, an arrangement direction II of the third connecting post 222 and the fourth connecting post 223 and the axial direction of the carrier 21 may jointly define the second plane, and the second plane may be perpendicular to the first plane.

For example, an intersection position of the two SMA wires (235 and 236) is disposed in the middle, that is, the two SMA wires are aligned with the optical axis 11 of the lens 1 in the first direction X or the second direction Y. Specifically, projections of the two SMA wires (235 and 236) on a reference plane form an intersection point, the reference plane is parallel to the optical axis 11 of the lens 1 and parallel to the two SMA wires (235 and 236), and a projection of the optical axis 11 of the lens 1 on the reference plane covers the intersection point.

In this embodiment, the first movable clamping jaw 231, the first SMA wire 235, and the first static clamping jaw 233 are symmetrical to the second movable clamping jaw 232, the second SMA wire 236, and the first static clamping jaw 233, with respect to the XZ plane or the YZ plane, so that a drive action of the actuation component of the SMA actuator 2 is easier to implement, and drive precision is high. In another embodiment, an intersection position of the two SMA wires (235 and 236) may not be disposed in the middle, for example, the intersection position is close to the first edge line 2133 or the second edge line 2143 relative to the optical axis 11 of the lens 1.

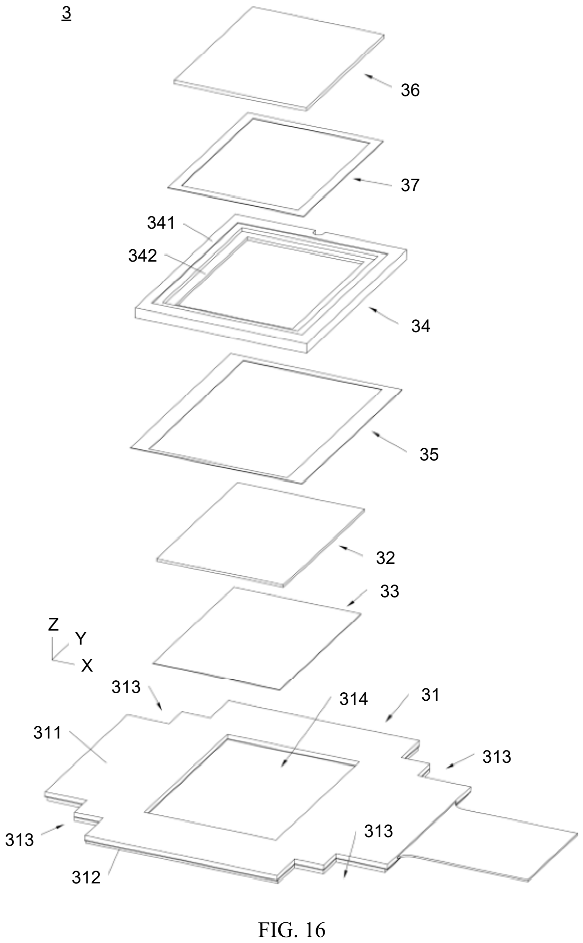

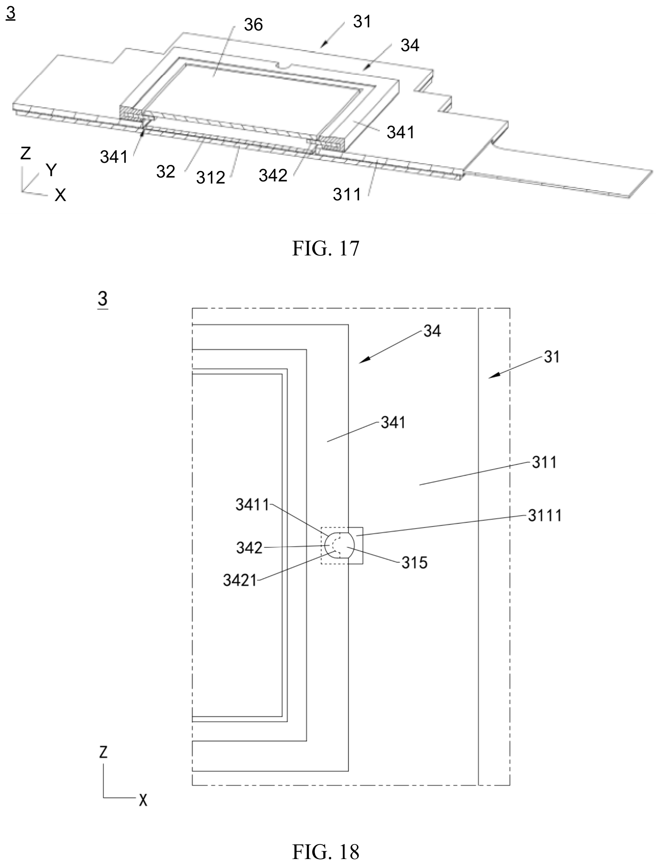

Refer to FIG. 4, FIG. 16, and FIG. 17. FIG. 16 is a diagram of an exploded structure of the photosensitive assembly 3 shown in FIG. 4, and FIG. 17 is a cross-sectional diagram of a structure of the photosensitive assembly 3 shown in FIG. 4 cut along C-C. It may be understood that FIG. 16 and FIG. 17 show examples of some components included in the photosensitive assembly 3. Actual shapes, actual sizes, actual positions, and actual structures of these components are not limited by FIG. 16 and FIG. 17. The photosensitive assembly 3 may alternatively include more or fewer components than those in FIG. 16 and FIG. 17.

In some embodiments, the photosensitive assembly 3 includes a substrate 31, an image sensor 32, a first connection layer 33, a light filter bracket 34, a second connection layer 35, a light filter 36, and a third connection layer 37.

For example, the substrate 31 includes a circuit board 311 and a stiffener 312. The stiffener 312 is fastened to one side of the circuit board 311 in a stacked manner, and the stiffener 312 is configured to increase structural strength of the circuit board 311. The circuit board 311 may be a rigid circuit board, may be a flexible circuit board, or may be a rigid-flex circuit board. The circuit board 311 may be an FR-4 dielectric board, or may be a Rogers (Rogers) dielectric board, or may be a hybrid dielectric board of Rogers and FR-4, or the like. The stiffener 312 may be a steel plate, an aluminum plate, or the like. In another embodiment, the substrate 31 may alternatively not include the stiffener 312.

Recessed avoidance spaces 313 are disposed at four corners of the substrate 31, and the avoidance space 313 may be recessed from an outer side surface of the substrate 31 to the inside of the substrate 31. The avoidance space 313 may be a through hole or a groove. In this embodiment, the through hole is used as an example for illustration. In this case, the avoidance space 313 penetrates the circuit board 311 and the stiffener 312 in a thickness direction of the substrate 31. The thickness direction of the substrate 31 is parallel to the third direction Z.

A mounting hole 314 may be further disposed in the middle of the substrate 31. The mounting hole 314 penetrates the circuit board 311, and a part of the stiffener 312 is exposed. The image sensor 32 may be at least partially located in the mounting hole 314, so that a height of the camera module 30 in the third direction Z can be reduced. The image sensor 32 may also be referred to as a photosensitive chip, or may also be referred to as a photosensitive element. The image sensor 32 is configured to: collect scene light passing through the lens 1, and convert image information carried in the scene light into an electrical signal. The image sensor 32 may be fastened to the stiffener 312 through the first connection layer 33. The first connection layer 33 may be an adhesive layer or the like. In another embodiment, the mounting hole 314 may not be disposed on the substrate 31, the image sensor 32 is located on a side that is of the circuit board 311 and that is away from the stiffener 312, and the image sensor 32 may be fastened to the circuit board 311 through the first connection layer 33.

For example, the entire light filter bracket 34 may be approximately frame-shaped. The light filter bracket 34 and the image sensor 32 are located on a same side of the substrate 31, and the light filter bracket 34 is fastened to the substrate 31 and is disposed around the image sensor 32. For example, the light filter bracket 34 may be fastened to the substrate 31 through the second connection layer 35, and the second connection layer 35 may be an adhesive layer or the like. The light filter 36 is fastened to the light filter bracket 34, and is disposed facing the image sensor 32. The light filter 36 may be fastened to the light filter bracket 34 through the third connection layer 37, and the third connection layer 37 may be an adhesive layer or the like.

In some embodiments, the light filter bracket 34 may include an insulation body 341 and a magnetic conductive member 342, and the magnetic conductive member 342 is embedded in the insulation body 341. The light filter bracket 34 may be formed through an insert-molding (insert-molding) process. In this embodiment, the light filter bracket 34 has high structural strength. This helps reduce a risk of breaking the light filter 36. The insulation body 341 may be made of an insulation material like plastic. The magnetic conductive member 342 has high magnetic permeability, and the magnetic conductive member 342 may also be conductive. In some embodiments, the magnetic conductive member 342 may be made of a magnetic conductive material as a whole. The magnetic conductive material may be but is not limited to SPCC (steel-plate-cold-common, usually a cold-rolled carbon steel sheet and steel strip), SUS430 (430 stainless steel), 65Mn (spring steel, Spring steel), or the like. In some other embodiments, the magnetic conductive member 342 may alternatively use a structure in which a magnetic conductive layer is plated on a surface of a non-magnetic conductive mechanical member, to implement a magnetically conductive function. The non-magnetic conductive mechanical member may be, for example, a stainless steel metal member, to have high structural strength. The magnetic conductive layer may be, for example, a nickel metal layer or a copper metal layer.

Refer to FIG. 17 and FIG. 18. FIG. 18 is a diagram of a structure of the photosensitive assembly 3 shown in FIG. 4 from another perspective.

In some embodiments, the insulation body 341 of the light filter bracket 34 is fastened to the substrate 31, and the magnetic conductive member 342 is electrically connected to the substrate 31, to implement grounding.

The magnetic conductive member 342 may be fastened to the substrate 31 through a solder ball soldering, a conductive adhesive, a surface mount technology (Surface Mount Technology, SMT) process, or the like.

For example, a pad 3111 may be disposed on the circuit board 311 of the substrate 31, and the pad 3111 is implemented by leaking copper in a partial region of a conductive layer in the circuit board 311. A first groove 3411 is disposed on the insulation body 341 of the light filter bracket 34. The first groove 3411 is recessed from an outer side surface of the insulation body 341 to the inside of the insulation body 341, and penetrates the insulation body 341 in a thickness direction of the light filter bracket 34. The thickness direction of the light filter bracket 34 is parallel to the third direction Z. A partial structure of the magnetic conductive member 342 is located in the first groove 3411, and is exposed relative to the insulation body 341. A second groove 3421 may be disposed on the magnetic conductive member 342, the second groove 3421 communicates with the first groove 3411, and the second groove 3421 is recessed from an outer side surface of the magnetic conductive member 342 to the inside of the magnetic conductive member 342, and penetrates the magnetic conductive member 342 in the thickness direction of the light filter bracket 34. In this case, a part that is of the magnetic conductive member 342 and that is exposed to the second groove 3421 may be approximately crescent-shaped or half-frame-shaped. Both the second groove 3421 and the first groove 3411 are disposed directly facing the pad 3111 on the substrate 31, and soldering 315 is performed on the second groove 3421, the first groove 3411, and the pad 3111, to be electrically connected to the magnetic conductive member 342 and the substrate 31, so that the magnetic conductive member 342 can be grounded.

In this embodiment, structural designs of the second groove 3421 and the first groove 3411 can guide the soldering 315 in a soldering process, so that a soldering structure is stable, and impedance of the soldering is stable. It may be understood that, in another embodiment, the insulation body 341 and the magnetic conductive member 342 of the light filter bracket 34 may also guide the soldering 315 in another structure, to ensure soldering quality. This is not strictly limited in embodiments of this application. In another embodiment, the magnetic conductive member 342 and the substrate 31 may alternatively be connected through a conductive silver adhesive, another conductive material, or a conductive structure. This is not strictly limited in embodiments of this application.

Refer to FIG. 16 and FIG. 17 again. In some embodiments, the insulation body 341 of the light filter bracket 34 may be frame-shaped, the magnetic conductive member 342 may be frame-shaped, and the magnetic conductive member 342 protrudes relative to an inner peripheral side surface of the insulation body 341. The light filter 36 is fastened to the magnetic conductive member 342. In this case, the magnetic conductive member 342 is configured to provide a support step for supporting the light filter 36. Compared with a plastic step used in a conventional light filter bracket 34, a thickness of the support step in this embodiment may be reduced from about 0.18 mm to about 0.1 mm. This helps reduce a back focal length of the lens 1, to reduce a total height of the camera module 30.

The light filter 36 may be configured to filter out stray light of scene light passing through the lens 1, to ensure that an image shot by the camera module 30 has better clarity. The light filter 36 may be but is not limited to a blue glass light filter. For example, the light filter 36 may alternatively be an infrared cut filter (infrared cut filter, IRCF) or a dual-pass light filter. The dual-pass light filter may make visible light and infrared light in the scene light pass through at the same time, or make visible light and light of another specific wavelength (for example, ultraviolet light) in the scene light pass through at the same time, or make infrared light and light of another specific wavelength (for example, ultraviolet light) pass through at the same time.

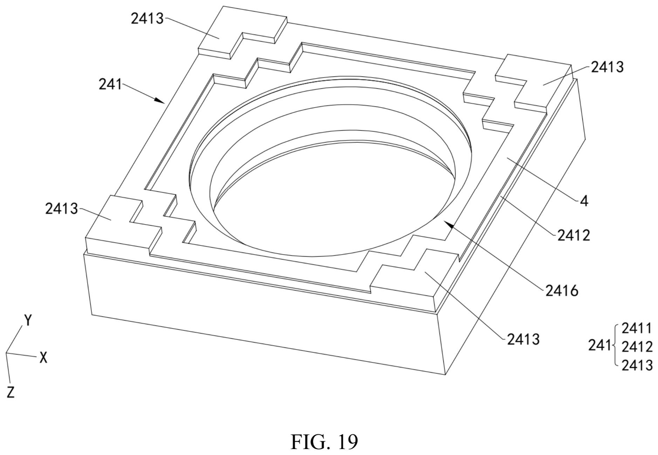

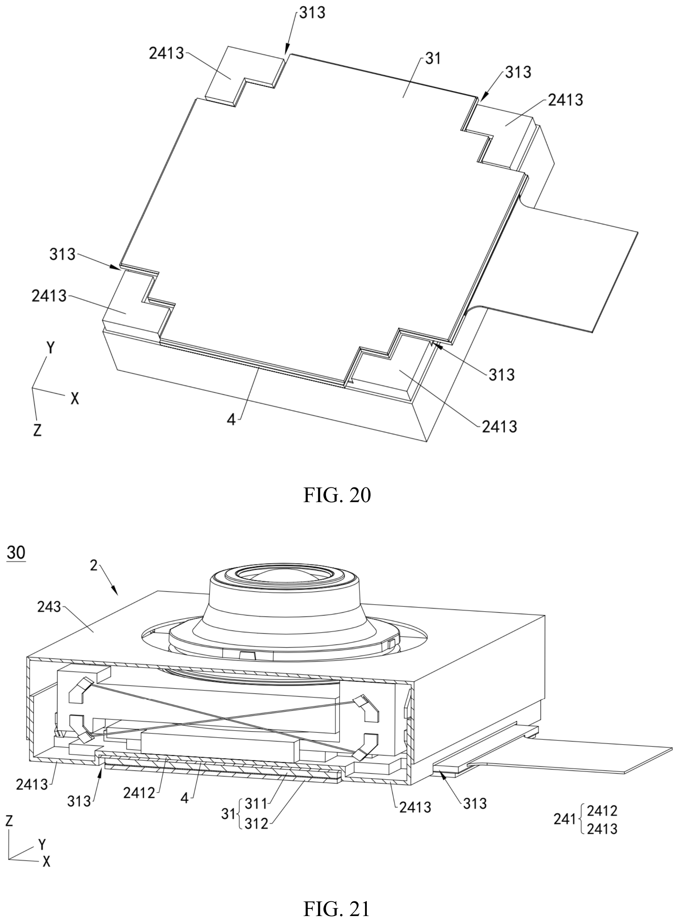

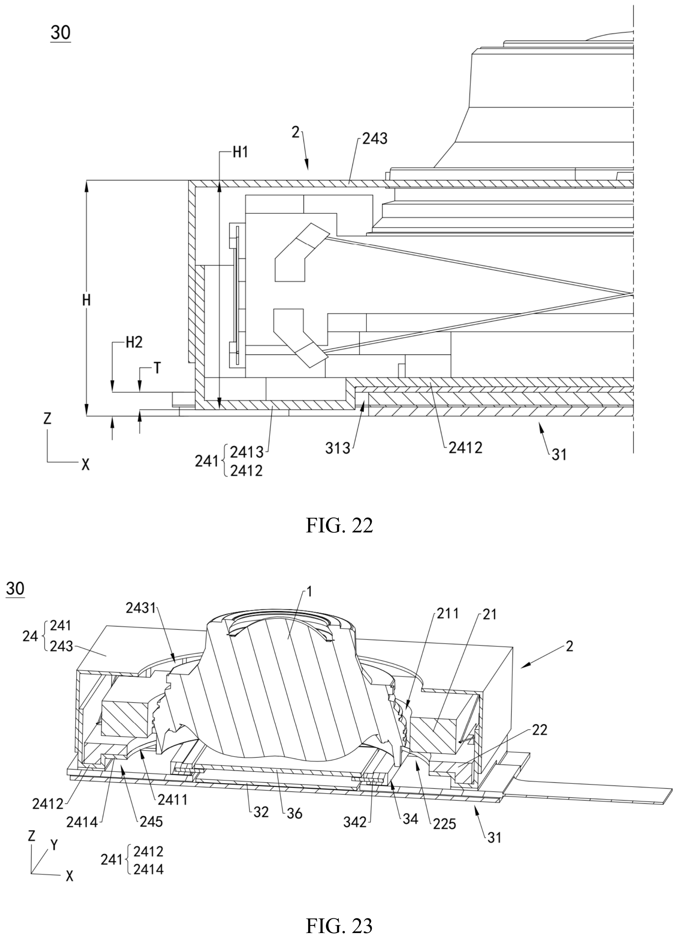

Refer to FIG. 19 to FIG. 22. FIG. 19 is a diagram of a partial structure of the camera module 30 shown in FIG. 3 from another perspective, FIG. 20 is a diagram of a structure of the camera module 30 shown in FIG. 3 from another perspective, FIG. 21 is a cross-sectional diagram of a structure of the camera module 30 shown in FIG. 3 cut along D-D, and FIG. 22 is a diagram of the structure shown in FIG. 21 from another perspective.

In some embodiments, the first adhesive layer 4 is fastened to a surface that is of the first portion 2412 of the bottom plate 241 and that is away from the top plate 243, and the first adhesive layer 4 is further fastened to the substrate 31, so that the first portion 2412 of the bottom plate 241 is fastened to the substrate 31. The first portion 2412 of the bottom plate 241 may be fastened to the circuit board 311 of the substrate 31, and the stiffener 312 is stacked on a side that is of the circuit board 311 and that is away from the first portion 2412. A shape of the first adhesive layer 4 may adapt to a shape of the first portion 2412 of the bottom plate 241, to increase a connection area between the first portion 2412 of the bottom plate 241 and the substrate 31, and improve connection strength. At least a part of the four second portions 2413 of the bottom plate 241 are located in the four avoidance spaces 313 of the substrate 31 in a one-to-one correspondence.

In this embodiment, a shoulder height H of the camera module 30, a height H1 of the SMA actuator 2 in the third direction Z, a thickness H2 of the substrate 31 in the third direction Z, and a depth T of the second portion 2413 of the bottom plate 241 extending into the avoidance space 313 of the substrate 31 meet: H=H1+H2-T. The depth T of the second portion 2413 of the bottom plate 241 extending into the avoidance space 313 of the substrate 31 is a spacing between a surface that is of the second portion 2413 of the bottom plate 241 and that is away from the top plate 243 and a surface that is of the first portion 2412 of the substrate 31 and that is close to the bottom plate 241 in the third direction Z.

In this embodiment, the bottom plate 241 of the SMA actuator 2 uses a step structure, so that a distance between the second portion 2413 of the bottom plate 241 and the top plate 243 is large, to ensure driving performance of the SMA actuator 2. This ensures image shooting quality of the camera module 30. In addition, a distance between the first portion 2412 of the bottom plate 241 and the top plate 243 is small, the first portion 2412 of the bottom plate 241 is fastened to the substrate 31, and the second portion 2413 of the bottom plate 241 is embedded in the avoidance space 313 of the substrate 31. In this way, a height of the SMA actuator 2 after being assembled with the photosensitive assembly 3 is small, so that a shoulder height of the camera module 30 is effectively reduced, thinning of the camera module 30 is implemented, and impact on an overall thickness and appearance of the electronic device 100 in which the camera module 30 is used is reduced.

In some embodiments, a first distance is formed between a surface that is of the second portion 2413 of the bottom plate 241 and that is away from the top plate 243 and a surface that is of the top plate 243 and that is away from the bottom plate 241. A second distance is formed between a surface that is of the substrate 31 and that is away from the top plate 243 and the surface that is of the top plate 243 and that is away from the bottom plate 241. The first distance is slightly less than the second distance. This reduces a shoulder height of the camera module 30, and reserves an assembly tolerance between the SMA actuator 2 and the photosensitive assembly 3 in the third direction Z, to improve assembly precision of the camera module 30. In another embodiment, the surface that is of the second portion 2413 of the bottom plate 241 and that is away from the top plate 243 may alternatively be flush with the surface that is of the substrate 31 and that is away from the top plate 243, to further reduce the shoulder height of the camera module 30. In other words, the depth T of the second portion 2413 of the bottom plate 241 extending into the avoidance space 313 of the substrate 31 may be close to a sum of thicknesses of the substrate 31 and the first adhesive layer 4. In some embodiments, the shoulder height of the camera module 30 may be reduced by about 0.4 mm to 0.6 mm, for example, by about 0.5 mm, compared with that of a camera module in a conventional solution.

In some embodiments, a distance between the second portion 2413 of the bottom plate 241 of the SMA actuator 2 and the top plate 243 may be approximately equal to a height of an existing SMA. In this way, the SMA actuator 2 can simultaneously drive the carrier 21, the lens 1 fastened to the carrier 21, and a variable aperture fastened to the carrier 21 or the lens 1.

Refer to FIG. 23. FIG. 23 is a cross-sectional diagram of a structure of the camera module 30 shown in FIG. 3 cut along E-E.

In some embodiments, the lens 1 is mounted in the lens mounting hole 211 of the carrier 21, to be fastened to the carrier 21. The lens 1 may be partially accommodated in the movable hole 225 of the base 22, to help reduce a height of the camera module 30 in the third direction Z. A light entrance side of the lens 1 may be exposed from the second through hole 2431 of the top plate 243 of the housing 24, and the first through hole 2411 of the bottom plate 241 directly faces the lens 1. The image sensor 32 is fastened to the middle of the substrate 31 and is electrically connected to the substrate 31, and the image sensor 32 is disposed facing the lens 1.

The third portion 2414 of the bottom plate 241 is closer to the top plate 243 than the first portion 2412 of the bottom plate 241, so that an accommodation space 245 is formed between the third portion 2414 of the bottom plate 241 and the substrate 31, and a height of the accommodation space 245 is a sum of a height of the second sink groove 2416 (as shown in FIG. 19) and a thickness of the first adhesive layer 4. In this embodiment, a partial structure of the photosensitive assembly 3 may be arranged in the accommodation space 245, so that an assembly structure of the SMA actuator 2 and the photosensitive assembly 3 is more compact. This reduces a height of the camera module 30 in the third direction Z.

For example, the light filter bracket 34 is fastened to a side that is of the substrate 31 and that is close to the lens 1, and the light filter 36 is located between the lens 1 and the image sensor 32, and is fastened to the light filter bracket 34. The light filter 36 and the light filter bracket 34 are located between the first through hole 2411 and the substrate 31 and/or between the third portion 2414 of the bottom plate 241 and the substrate 31.

In the camera module 30, because a plurality of SMA wires (235 and 236) of the SMA actuator 2 are controlled by using a PWM (Pulse-width modulation, pulse-width modulation) voltage, and a PWM signal is easily coupled to a signal of the image sensor 32, the image sensor 32 is interfered with, and there are risks such as a disordered pattern (for example, a stripe) and frame freezing. In this embodiment, the light filter bracket 34 is located on a side that is of the image sensor 32 and that is close to the SMA actuator 2, the magnetic conductive member 342 of the light filter bracket 34 is grounded, and the magnetic conductive member 342 has a magnetically conductive capability. Therefore, interference of the PWM signal of the SMA actuator 2 to the image sensor 32 can be shielded or reduced, to improve imaging quality of the camera module 30.

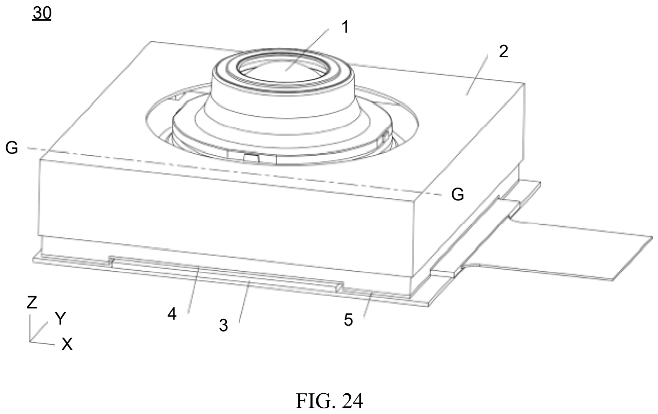

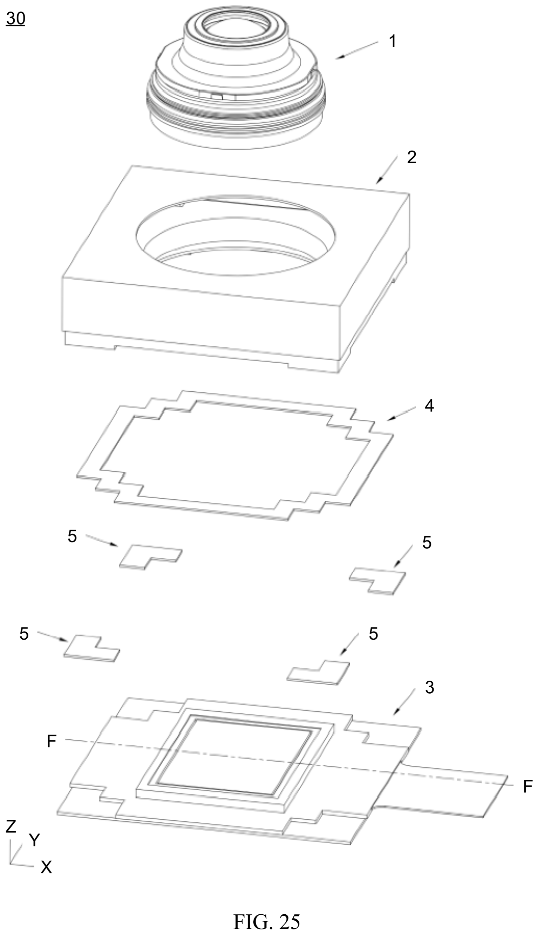

Refer to FIG. 24 and FIG. 25. FIG. 24 is a diagram of a structure of the camera module 30 shown in FIG. 2 in some other embodiments, and FIG. 25 is a diagram of a partial exploded structure of the camera module 30 shown in FIG. 24. The camera module 30 in this embodiment may include most technical features of the camera module 30 in the foregoing embodiment. The following mainly describes differences between the two, and most content that is the same between the two is not described again. It may be understood that FIG. 24 and FIG. 25 merely show examples of some components included in the camera module 30, and actual shapes, actual sizes, actual positions, and actual structures of these components are not limited by FIG. 24 and FIG. 25. The camera module 30 may alternatively include more or fewer components than those in FIG. 24 and FIG. 25.

In some embodiments, the camera module 30 includes the lens 1, the SMA actuator 2, the photosensitive assembly 3, the first adhesive layer 4, and the second adhesive layer 5. The lens 1 is fastened to the SMA actuator 2, and the SMA actuator 2 is configured to drive the lens 1 to move, to implement automatic focusing and/or optical image stabilization. The SMA actuator 2 may be fastened to the photosensitive assembly 3 through the first adhesive layer 4 and the second adhesive layer 5.

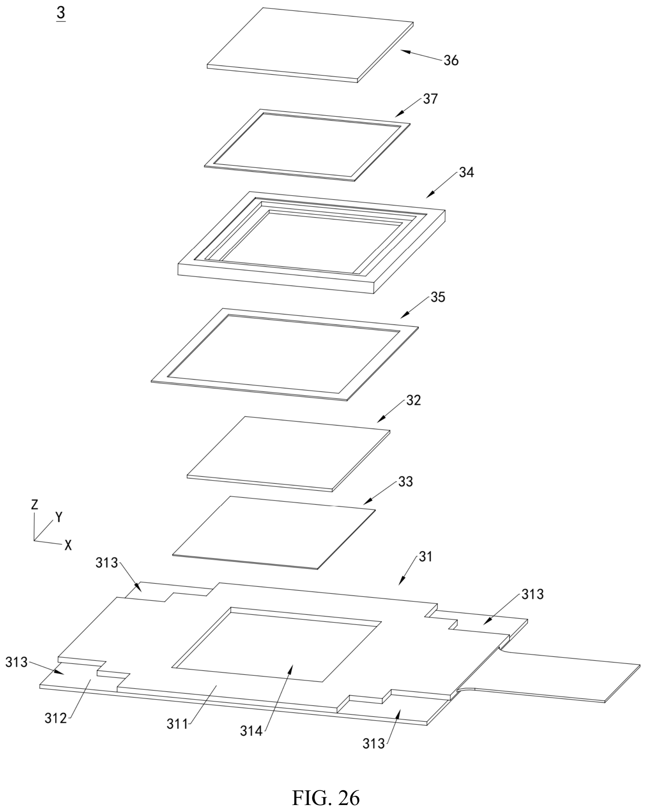

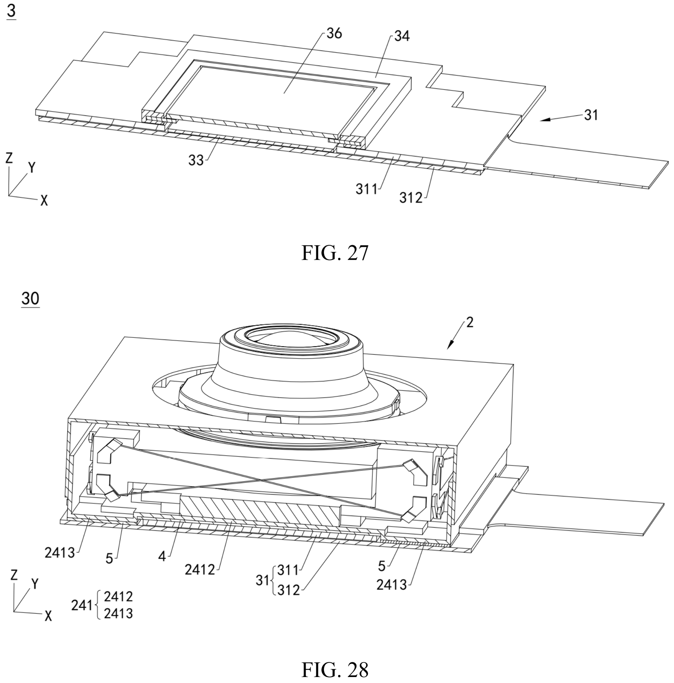

Refer to FIG. 26 and FIG. 27. FIG. 26 is a diagram of an exploded structure of the photosensitive assembly 3 shown in FIG. 25. FIG. 27 is a cross-sectional diagram of a structure of the photosensitive assembly 3 shown in FIG. 25 cut along F-F. It may be understood that FIG. 26 and FIG. 27 show examples of some components included in the photosensitive assembly 3. Actual shapes, actual sizes, actual positions, and actual structures of these components are not limited by FIG. 26 and FIG. 27. The photosensitive assembly 3 may alternatively include more or fewer components than those in FIG. 26 and FIG. 27.

In some embodiments, the photosensitive assembly 3 includes the substrate 31, the image sensor 32, the first connection layer 33, the light filter bracket 34, the second connection layer 35, the light filter 36, and the third connection layer 37.

For example, the substrate 31 includes a circuit board 311 and a stiffener 312. The stiffener 312 is fastened to one side of the circuit board 311 in a stacked manner, and the stiffener 312 is configured to increase structural strength of the circuit board 311. The circuit board 311 may be a rigid circuit board, may be a flexible circuit board, or may be a rigid-flex circuit board. The circuit board 311 may be an FR-4 dielectric board, or may be a Rogers (Rogers) dielectric board, or may be a hybrid dielectric board of Rogers and FR-4, or the like. The stiffener 312 may be a steel plate, an aluminum plate, or the like.

Recessed avoidance spaces 313 are disposed at four corners of the substrate 31, and the avoidance space 313 may be recessed from an outer side surface of the substrate 31 to the inside of the substrate 31. The avoidance space 313 may be a groove. In this case, the avoidance space 313 penetrates the circuit board 311 in a thickness direction of the substrate 31 and a part of the stiffener 312 is exposed. The thickness direction of the substrate 31 is parallel to the third direction Z.

A mounting hole 314 may be further disposed in the middle of the substrate 31. The mounting hole 314 penetrates the circuit board 311, and a part of the stiffener 312 is exposed. The image sensor 32 may be at least partially located in the mounting hole 314, and the image sensor 32 may be fastened to the stiffener 312 through the first connection layer 33. The first connection layer 33 may be an adhesive layer or the like. In another embodiment, the mounting hole 314 may not be disposed on the substrate 31, the image sensor 32 is located on a side that is of the circuit board 311 and that is away from the stiffener 312, and the image sensor 32 may be fastened to the circuit board 311 through the first connection layer 33.

For example, the entire light filter bracket 34 may be approximately frame-shaped. The light filter bracket 34 and the image sensor 32 are located on a same side of the substrate 31, and the light filter bracket 34 is fastened to the substrate 31 and is disposed around the image sensor 32. For example, the light filter bracket 34 may be fastened to the substrate 31 through the second connection layer 35, and the second connection layer 35 may be an adhesive layer or the like. The light filter 36 is fastened to the light filter bracket 34, and is disposed facing the image sensor 32. The light filter 36 may be fastened to the light filter bracket 34 through the third connection layer 37, and the third connection layer 37 may be an adhesive layer or the like.

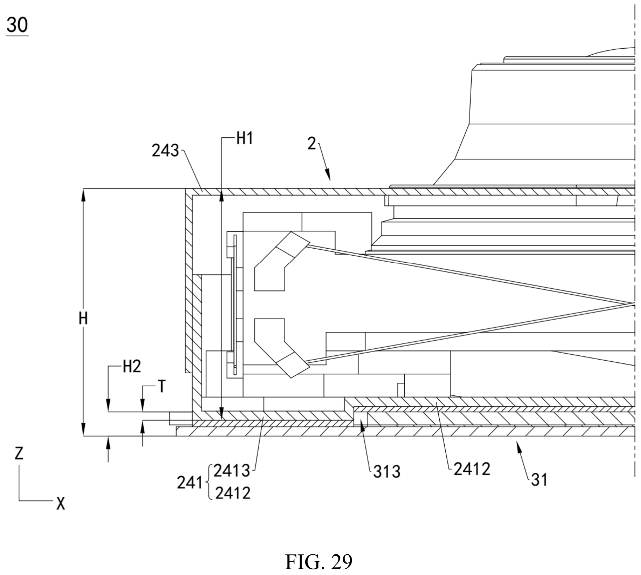

Refer to FIG. 28 and FIG. 29. FIG. 28 is a cross-sectional diagram of a structure of the camera module 30 shown in FIG. 24 cut along G-G. FIG. 29 is a diagram of a structure of the structure shown in FIG. 28 from another perspective.

In some embodiments, the first portion 2412 of the bottom plate 241 of the SMA actuator 2 is fastened to the circuit board 311 of the substrate 31, and the stiffener 312 of the substrate 31 is stacked on a side that is of the circuit board 311 and that is away from the first portion 2412 of the bottom plate 241. The second portion 2413 of the bottom plate 241 of the SMA actuator 2 is fastened to the stiffener 312 of the substrate 31. For example, the first portion 2412 of the bottom plate 241 may be bonded to the circuit board 311 of the substrate 31 through the first adhesive layer 4, and the second portion 2413 of the bottom plate 241 may be bonded to the stiffener 312 of the substrate 31 through the second adhesive layer 5. A quantity of second adhesive layers 5 is correspondingly set to four.

In this embodiment, a shoulder height H of the camera module 30, a height H1 of the SMA actuator 2 in the third direction Z, a thickness H2 of the substrate 31 in the third direction Z, and a depth T of the second portion 2413 of the bottom plate 241 extending into the avoidance space 313 of the substrate 31 meet: H=H1+H2-T. The depth T of the second portion 2413 of the bottom plate 241 extending into the avoidance space 313 of the substrate 31 is a spacing between a surface that is of the second portion 2413 of the bottom plate 241 and that is away from the top plate 243 and a surface that is of the first portion 2412 of the substrate 31 and that is close to the bottom plate 241 in the third direction Z.

In this embodiment, the bottom plate 241 of the SMA actuator 2 uses a step structure, so that a distance between the second portion 2413 of the bottom plate 241 and the top plate 243 is large, to ensure driving performance of the SMA actuator 2. This ensures image shooting quality of the camera module 30. In addition, a distance between the first portion 2412 of the bottom plate 241 and the top plate 243 is small, the first portion 2412 of the bottom plate 241 is fastened to the substrate 31, and the second portion 2413 of the bottom plate 241 is embedded in the avoidance space 313 of the substrate 31. In this way, a height of the SMA actuator 2 after being assembled with the photosensitive assembly 3 is small, so that a shoulder height of the camera module 30 is effectively reduced, thinning of the camera module 30 is implemented, and impact on an overall thickness and appearance of the electronic device 100 in which the camera module 30 is used is reduced.

In addition, because the first portion 2412 of the bottom plate 241 of the SMA is fastened to the substrate 31, and the second portion 2413 is also fastened to the substrate 31, a connection area between the bottom plate 241 and the substrate 31 is large, so that a risk of debonding between the bottom plate 241 and the substrate 31 can be reduced, and structural reliability of the camera module 30 is improved.

In some embodiments, the depth T of the second portion 2413 of the bottom plate 241 extending into the avoidance space 313 of the substrate 31 may be close to a thickness of the circuit board 311. For example, a shoulder height of the camera module 30 may be reduced by about 0.2 mm to 0.4 mm, for example, by about 0.25 mm to 0.3 mm, compared with that of a camera module in a conventional solution.

In another embodiment, the second portion 2413 of the bottom plate 241 may not be bonded to the stiffener 312, and the second adhesive layer 5 may not be disposed on the camera module 30. In this way, a value of the depth T of the second portion 2413 of the bottom plate 241 extending into the avoidance space 313 of the substrate 31 is large, to further reduce the shoulder height of the camera module 30.

It should be noted that embodiments in this application and features in embodiments may be combined with each other without a conflict, and any combination of features in different embodiments also falls within the protection scope of this application. In other words, the foregoing described plurality of embodiments may further be combined according to an actual requirement.

It should be noted that all the foregoing accompanying drawings are example figures of this application, and do not represent actual sizes of products. In addition, a size proportional relationship between components in the accompanying drawings is not intended to limit an actual product in this application.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera module (30), comprising a lens (1) and an SMA actuator (2), wherein the SMA actuator (2) comprises a carrier (21), a base (22), and an SMA actuation component (23), the lens (1) is fastened to the carrier (21), the SMA actuation component (23) is connected to the carrier (21) and the base (22), and the SMA actuation component (23) is configured to drive the carrier (21) to move relative to the base (22), to implement automatic focusing and/or optical image stabilization;
the SMA actuator (2) further comprises a top plate (243) and a bottom plate (241) that are disposed opposite to each other, the carrier (21), the base (22), and the SMA actuation component (23) are located between the top plate (243) and the bottom plate (241), the bottom plate (241) is provided with a first through hole (2411) that directly faces the lens (1), and the bottom plate (241) comprises a first portion (2412) and four second portions (2413), wherein the first portion (2412) is disposed around the first through hole (2411), the four second portions (2413) are spaced on an outer peripheral side of the first portion (2412), and a distance between the second portion (2413) and the top plate (243) is greater than a distance between the first portion (2412) and the top plate (243); and
the camera module (30) further comprises a substrate (31) and an image sensor (32), four corners of the substrate (31) are provided with recessed avoidance spaces (313), the first portion (2412) is fastened to the substrate (31), at least a part of the second portion (2413) is located in the avoidance space (313), the image sensor (32) is fastened to a middle of the substrate (31) and is electrically connected to the substrate (31), and the image sensor (32) is disposed facing the lens (1).

2. The camera module (30) according to claim 1, wherein the SMA actuation component (23) comprises four groups of actuation units (23a), and the four groups of actuation units (23a) are evenly arranged in a circumferential direction of the carrier (21);
each group of actuation units (23a) comprises a pair of movable clamping jaws (231 and 232), a pair of static clamping jaws (233 and 234), and two SMA wires (235 and 236);
the pair of movable clamping jaws (231 and 232) is fastened to the carrier (21), the pair of static clamping jaws (233 and 234) is fastened to the base (22), the pair of movable clamping jaws (231 and 232) and the pair of static clamping jaws (233 and 234) are spaced in the circumferential direction of the carrier (21), and the two SMA wires (235 and 236) are cross-connected to the pair of movable clamping jaws (231 and 232) and the pair of static clamping jaws (233 and 234); and
in the circumferential direction of the carrier (21), pairs of movable clamping jaws (231 and 232) of two adjacent groups of actuation units (23a) are adjacently disposed, or pairs of static clamping jaws (233 and 234) of two adjacent groups of actuation units (23a) are adjacently disposed.

3. The camera module (30) according to claim 2, wherein the pair of movable clamping jaws (231 and 232) comprises a first movable clamping jaw (231) and a second movable clamping jaw (232), the second movable clamping jaw (232) is located between the first movable clamping jaw (231) and the bottom plate (241), and the second movable clamping jaw (232) is disposed directly facing the second portion (2413).

4. The camera module (30) according to claim 3, wherein in the same group of actuation units (23a), an arrangement direction of the first movable clamping jaw (231) and the second movable clamping jaw (232) is parallel to an optical axis (11) of the lens (1).

5. The camera module (30) according to claim 3, wherein the carrier (21) comprises a first side surface (2131) and a fourth side surface (2132) that are disposed adjacent to each other, a first edge line (2133) is formed at an intersection of the first side surface (2131) and the fourth side surface (2132), a pair of movable clamping jaws (231 and 232) of one group of actuation units (23a) is fastened to the first side surface (2131), and a pair of movable clamping jaws (231 and 232) of the other group of actuation units (23a) is fastened to the fourth side surface (2132); and
in the same group of actuation units (23a), a distance between the second movable clamping jaw (232) and the first edge line (2133) is less than a distance between the first movable clamping jaw (231) and the first edge line (2133).

6. The camera module (30) according to claim 5, wherein projections of the two SMA wires (235 and 236) on a reference plane form an intersection point, the reference plane is parallel to an optical axis (11) of the lens (1), and is parallel to the two SMA wires (235 and 236), and a projection of the optical axis (11) of the lens (1) on the reference plane covers the intersection point.

7. The camera module (30) according to any one of claims 2 to 6, wherein the carrier (21) comprises a first body (212), a first connecting post (213), and a second connecting post (214), the first body (212) comprises four first corner portions, the first connecting post (213) and the second connecting post (214) are respectively fastened to two first corner portions that are arranged diagonally, movable clamping jaws of the four groups of actuation units (23a) are fastened to the first connecting post (213) and the second connecting post (214), and a first notch (215) and a second notch (216) are respectively disposed on the other two first corner portions that are arranged diagonally;
the base (22) comprises a second body (221), a third connecting post (222), and a fourth connecting post (223), the second body (221) comprises four second corner portions, the third connecting post (222) and the fourth connecting post (223) are respectively fastened to two second corner portions that are arranged diagonally, static clamping jaws of the four groups of actuation units (23a) are fastened to the third connecting post (222) and the fourth connecting post (223), and a third notch (226) and a fourth notch (227) are respectively disposed on the other two second corner portions that are arranged diagonally; and
the second body (221) is located between the first body (212) and the bottom plate (241), the first connecting post (213) is partially located in the third notch (226), the second connecting post (214) is partially located in the fourth notch (227), the third connecting post (222) is partially located in the first notch (215), and the fourth connecting post (223) is partially located in the second notch (216).

8. The camera module (30) according to claim 7, wherein the second body (221) further comprises four second side portions, the four second side portions and the four second corner portions are alternately arranged one by one, the base (22) further comprises at least one epitaxial portion (224), and the at least one epitaxial portion (224) is fastened to outer side surfaces of the four second side portions; and
in a direction parallel to the optical axis (11) of the lens (1), a size of the epitaxial portion (224) is greater than a size of the second body (221), and the at least one epitaxial portion (224) is provided with an exposed gold finger.

9. The camera module (30) according to any one of claims 1 to 8, wherein the substrate (31) comprises a circuit board (311) and a stiffener (312), the first portion (2412) is fastened to the circuit board (311), the stiffener (312) is stacked on a side that is of the circuit board (311) and that is away from the first portion (2412), and the avoidance space (313) penetrates the circuit board (311) and the stiffener (312).

10. The camera module (30) according to any one of claims 1 to 8, wherein the substrate (31) comprises a circuit board (311) and a stiffener (312), the first portion (2412) is fastened to the circuit board (311), the stiffener (312) is stacked on a side that is of the circuit board (311) and that is away from the first portion (2412), the avoidance space (313) penetrates the circuit board (311), and a part of the stiffener (312) is exposed.

11. The camera module (30) according to claim 10, wherein the first portion (2412) is bonded to the circuit board (311), and the second portion (2413) is bonded to the stiffener (312).

12. The camera module (30) according to any one of claims 1 to 11, wherein the camera module (30) further comprises a light filter (36) and a light filter bracket (34), the light filter bracket (34) is fastened to a side that is of the substrate (31) and that is close to the lens (1), and is disposed around the image sensor (32), and the light filter (36) is located between the lens (1) and the image sensor (32), and is fastened to the light filter bracket (34).

13. The camera module (30) according to claim 12, wherein the bottom plate (241) further comprises a third portion (2414), the third portion (2414) is located on an inner side of the first portion (2412), the first through hole (2411) is formed on the third portion (2414), a distance between the third portion (2414) and the top plate (243) is less than the distance between the first portion (2412) and the top plate (243), and the base (22) is fastened to the third portion (2414); and
the light filter (36) and the light filter bracket (34) are located between the first through hole (2411) and the substrate (31) and/or between the third portion (2414) and the substrate (31).

14. The camera module (30) according to claim 12 or 13, wherein the light filter bracket (34) comprises an insulation body (341) and a magnetic conductive member (342), the magnetic conductive member (342) is embedded in the insulation body (341), the insulation body (341) is fastened to the substrate (31), and the magnetic conductive member (342) is electrically connected to the substrate (31).

15. The camera module (30) according to claim 14, wherein the insulation body (341) is frame-shaped, the magnetic conductive member (342) is frame-shaped, the magnetic conductive member (342) protrudes relative to an inner peripheral side surface of the insulation body (341), and the light filter (36) is fastened to the magnetic conductive member (342).

16. An electronic device (100), comprising the camera module (30) according to any one of claims 1 to 15 and an image processor (60), wherein the image processor (60) is communicatively connected to the camera module (30).
